# EUROPEAN PATENT SPECIFICATION

(11) **EP 1 429 403 B1**
(45) Date of publication and mention of the grant of the patent: **19.05.2010**
(21) Application number: 03026936.9
(22) Date of filing: 25.11.2003
(51) Int. Cl.: H01M 4/86, H01M 8/10

(54) **Membrane-electrode structure and polymer electrolyte fuel cell using the same**
Membran-Elektroden-Einheit und Polymerelektrolytbrennstoffzelle die diese Einheit enthält
Assemblage membrane-électrode et pile à combustible à électrolyte polymère comportant un tel assemblage

(30) Priority: 25.11.2002 JP 2002341362; 21.10.2003 JP 2003360615
(43) Date of publication of application: 16.06.2004
(73) Proprietor: HONDA MOTOR CO., LTD., Tokyo (JP)
(72) Inventor: Fukuda, Kaoru, Wako-shi, Saitama-ken (JP); Tanaka, Ichiro, Wako-shi, Saitama-ken (JP); Tani, Masaki, Wako-shi, Saitama-ken (JP); Matsuo, Junji, Wako-shi, Saitama-ken (JP)
(74) Representative: Böhm, Brigitte

(56) References cited:
- EP-A- 1 245 554
- US-A1- 2002 164 513
- US-A1- 2002 172 850

## Description

### BACKGROUND OF THE INVENTION

### Field of the Invention

The present invention relates to a membrane-electrode structure and a polymer electrolyte fuel cell using the membrane-electrode structure.

### Description of the Related Art

Oil resources are being exhausted and environmental issues including global warming caused by consumption of fossil fuel have grown into a serious problem. Accordingly, fuel cells have attracted attention as clean electric power source for electric motors which does not involve generation of carbon dioxide and have been extensively developed, having started to come into practical use in some areas. When the above-described fuel cell is installed in an automobile or the like, a polymer electrolyte fuel cell using a polymer electrolyte membrane is preferably used because a high voltage and a large current can be easily obtained.

As an electrode structure used in the above-described polymer electrolyte fuel cell, a structure has been known which comprises a pair of electrode catalyst layers each formed by integrating by an ion conducting polymer binder, a catalyst such as platinum supported by a catalyst carrier such as carbon black, a polymer electrolyte membrane capable of conducting ions sandwiched between both electrode catalyst layers, and backing layers laminated on the electrode catalyst layers (for example, see Japanese Patent Laid-Open No. 2000-223136). With the above-described electrode structures, a polymer electrolyte fuel cell can be formed by further laminating a separator on each backing layer which also works as a gas passage.

In the above-described polymer electrolyte fuel cell, one of the electrode catalyst layers is used as the anode electrode (fuel electrode) to which a fuel gas such as hydrogen, methanol is introduced through the above-described backing layer, and the other electrode catalyst layer is used as the cathode electrode (oxygen electrode) to which an oxidant gas such as air, oxygen is introduced through the above-described backing layer. In this way, in the anode electrode, by the action of the catalyst contained in the electrode catalyst layer, proton is generated from the fuel gas, and the proton is transferred to the electrode catalyst layer in the cathode electrode through the above-described polymer electrolyte membrane. Then, the proton is allowed to react to generate water in the electrode catalyst layer of the cathode electrode with the oxidant gas introduced into the cathode electrode under the action of the catalyst contained in the electrode catalyst layer. Accordingly, current can be taken out by connecting the anode electrode and the cathode electrode with a conducting wire.

Conventionally, in the above-described electrode structure, as the polymer electrolyte membrane, a perfluoroalkylene sulfonic acid polymer compound (for example, Nafion (brand name) manufactured by Du Pont Corp.) has been widely used. The perfluoroalkylene sulfonic acid polymer compound comprises excellent proton conductivity because it is sulfonated, and simultaneously comprises the chemical resistance as a fluorocarbon resin; however, there is a problem that it is expensive.

Accordingly, it has been examined to form an electrode structure for use in the polymer electrolyte fuel cell by using an inexpensive ion conducting material to replace the perfluoroalkylene sulfonic acid polymer compound. As an inexpensive ion conducting material, for example, sulfonated polyarylene based polymer is known.

However, there is a problem that the polymer electrolyte membrane composed of the sulfonated polyarylene based polymer is required to contain a large water content for performing ion exchange.

In order to solve the problem that the polymer electrolyte membrane composed of the sulfonated polyarylene based polymer is required to contain a large water content for performing ion exchange, it is conceivable that the amount of an ion conducting polymer binder contained in the electrode catalyst layer is made to increase and the ion conducting polymer binder is made to hold water.

When such a measure is taken, the water content contained in the polymer electrolyte membrane composed of the sulfonated polyarylene based polymer and the water content in the ion conducting polymer binder are equilibrated with each other. Thus, when the water content in the polymer electrolyte membrane is decreased, part of the water contained in the ion conducting polymer binder is supplied to the polymer electrolyte membrane to maintain the equilibrium between the two types of water contents, and the reduction of the water content in the polymer electrolyte membrane is expected to be thus suppressed.

However, when the electric power generation amount is increased in the high current region, the amount of the water generated in the electrode catalyst layer in the cathode electrode is increased, leading to an adverse effect that the generated water in the cathode electrode is held by the ion conducting polymer binder, and hence a water content more than necessary stagnates in the concerned electrode catalyst layer. The stagnation of the water content more than necessary in the electrode catalyst layer hinders the diffusion of the oxidant gas in the electrode catalyst layer, resulting in the decrease in terminal voltage.

### SUMMARY OF THE INVENTION

Thus, the present invention takes as its object the provision of a membrane-electrode structure capable of yielding excellent electric power generating performance even in the high current region by solving the above-described problems.

Another object of the present invention is to provide a polymer electrolyte fuel cell capable of yielding excellent electric power generating performance even in the high current region by use of the above-described membrane-electrode structure.

In order to achieve these objects, the membrane-electrode structure of the present invention according to claim 1 comprises an anode electrode and a cathode electrode, and a polymer electrolyte membrane made of a sulfonated polyarylene based polymer and held between both electrodes, wherein the cathode electrode comprises an electrode catalyst layer containing a catalyst particle having the catalyst loaded on the carbon particles, a pore forming member, and an ion conducting polymer in a weight ratio of 1.0 to 1.8 in relation to the carbon particles; the cathode electrode is in contact with the polymer electrolyte membrane through the electrode catalyst layer; and the electrode catalyst layer is such that the total sum volume of the pores in the layer falling within a pore diameter range from 0.01 to 30 µm, of the pores formed with the pore forming member, equal to or more than 6.0 µl/cm²·mg catalyst.

In the membrane-electrode structure of the present invention, the electrode catalyst layer of the cathode electrode contains the ion conducting polymer of the above-described range of content. Accordingly, by making the ion conducting polymer hold water, water can be supplied from the ion conducting polymer to the polymer electrolyte membrane when the water content contained in the polymer electrolyte membrane is decreased.

When the content of the ion conducting polymer contained in the electrode catalyst layer is less than 1.0 in weight ratio in relation to the carbon particles as the catalyst carrier, sufficient water content cannot be held. Additionally, when the content of the ion conducting polymer contained in the electrode catalyst layer is larger than 1.8 in weight ratio in relation to the carbon particles as the catalyst carrier, awater content more than necessary stagnates in the electrode catalyst layer in the case of the electric power generation in the high current region.

On the other hand, the electrode catalyst layer of the cathode electrode comprises the pores formed with the pore forming member, and accordingly can discharge the excessive water content through the pores, and can prevent the stagnation of the water content more than necessary in the electrode catalyst layer. The pores can discharge the water content through comprising pores of a pore diameter range from 0.01 to 30 µm, and the total sum volume of the pores falling within the above-described pore diameter range is required to be 6.0 µl/cm²·mg catalyst or more for the purpose of discharging the excessive water content. When the total sum volume of the pores falling within the above-described pore diameter range is less than 6.0 µl/cm²·mg catalyst, the stagnation of the water content more than necessary in the electrode catalyst layer cannot be prevented in the case of the electric power generation in the high current region.

It is preferable that the pores formed with the pore forming member have a pore diameter distribution comprising a first peak in the pore diameter range from 0.01 to 0.1 µm and a second peak in the pore diameter range from 0.1 to 1.0 µm. In the electrode catalyst layer, the pore diameter distribution has the above-described two peaks, and the extent of the discharged water content can be regulated by adjusting the volume of the pores falling within the pore diameter range from 0.01 to 0.1 µm and the volume of the pores falling within the pore diameter range from 0.1 to 1.0 µm.

Incidentally, in the present specification, "the sulfonated polyarylene based polymer" means the sulfonated polymer substance comprising the structure represented by the following formula: 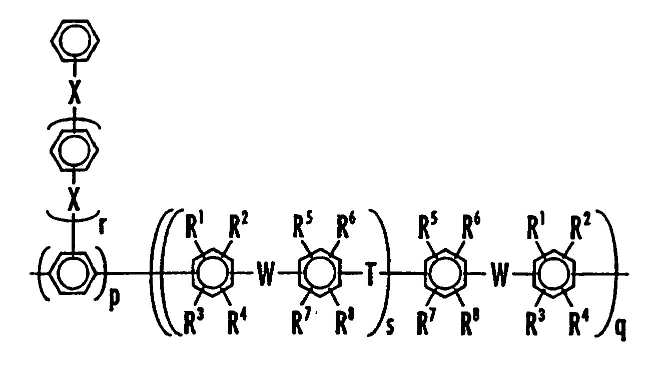 where -X- is a single bond or a divalent organic group, -W- is a divalent electron withdrawing group, -I- is a divalent organic group, R¹ to R⁸ each is a fluorine atom, a hydrogen atom, an alkyl group, an aryl group or an allyl group and R¹ to R⁸ may be identical to each other or may be different from each other, p ranges from 0.5 to 100, q ranges from 99.5 to 0, r is an integer of 0 to 10, and s is an integer of 1 to 100.

Examples of the above-described divalent organic group include electron withdrawing groups such as -CO-, -CONH-, - (CF₂)ₚ- (p is an integer of 1 to 10), -C(CF₃)₂-, -COO-, -SO-, - SO₂- and the like; groups such as -O- , -S-, -CH=CH-, -C≡C-, and the like; and additionally electron donating groups such as represented by the following formula:

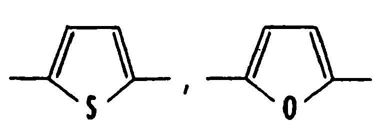

Additionally, examples of the above-described divalent electron with drawing group include groups such as -CO- , -CONH-, - (CF₂)ₚ- (p is an integer of 1 to 10), -C(CF₃)₂-, -COO-, -SO-, - SO₂- and the like.

A first aspect of the polymer electrolyte fuel cell of the present invention is a polymer electrolyte fuel cell in which a fuel gas is supplied to the anode electrode of the membrane-electrode structure comprising the above-described configuration, an oxidant gas less than 50% in relative humidity is supplied to the cathode electrode, and thus the electric power is generated under a low humidified condition, wherein the pores formed with the above-described pore forming member have a pore diameter distribution comprising a first peak in the pore diameter range from 0.01 to 0.1 µm and a second peak in the pore diameter range from 0.1 to 1.0 µm in which the height of the first peak is higher than the height of the second peak.

The polymer electrolyte fuel cell of the present aspect generates electric power under a low humidified condition, situated in an environment in which the water content contained in the polymer electrolyte membrane tends to be decreased, and the stagnation extent of the water content more than necessary in the electrode catalyst layer is small even in the case of electric power generation in the high current region. Accordingly, in the polymer electrolyte fuel cell of the present aspect, the height of the first peak is higher than the height of the second peak in the pore diameter distribution of the pores formed with the pore forming member, and hence discharging of the excessive water content in the electrode catalyst layer can be carried out slowly, and the reduction of the water content contained in the polymer electrolyte membrane can be prevented.

As described above, the polymer electrolyte fuel cell of the present aspect is situated in an environment in which the water content contained in the polymer electrolyte membrane tends to be decreased, and hence it is preferable that the weight ratio of the ion conducting polymer contained in the electrode catalyst layer of the cathode electrode to the carbon particles falls within the range from 1.2 to 1.8. When the content of the ion conducting polymer contained in the electrode catalyst layer is less than 1.2 in weight ratio in relation to the carbon particles as the catalyst carrier, a sufficient water content cannot sometimes be held. Additionally, when the content of the ion conducting polymer contained in the electrode catalyst layer exceeds 1.8 in weight ratio in relation to the carbon particles as the catalyst carrier, a water content more than necessary stagnates in the electrode catalyst layer in the case of electric power generation in the high current region.

The electrode catalyst layer of the cathode electrode is bonded to the polymer electrolyte membrane by means of thermal transfer. Accordingly, the pores formedwith the pore forming member are compressed during the above-described thermal transfer thereby reducing its pore diameter.

Accordingly, in the polymer electrolyte fuel cell of the present aspect, in order to achieve the above-described pore diameter distribution, it is preferable that the pore diameter distribution of the pores formed with the pore forming member in the electrode catalyst layer before thermal transfer comprises a third peak in the pore diameter range equal to or more than 5 µm, and the height of the third peak falls within the range from 0.9 to 1.8 µl/cm²·mg catalyst in terms of the pore volume. When the peak height of the third peak is smaller than 0.9 µl/cm²·mg catalyst, a pore diameter distribution in which the height of the first peak is higher than the height of the second peak cannot be obtained as the case may be. When the peak height of the third peak exceeds 1.8 µl/cm²·mg catalyst, the pore diameter distribution becomes the one in which the height of the first peak is lower than the height of the second peak.

On the other hand, a second aspect of the polymer electrolyte fuel cell of the present invention is a polymer electrolyte fuel cell generating electric power under a highly humidified condition by supplying a fuel gas to the anode electrode of the membrane-electrode structure comprising the above-described configuration and by supplying an oxidant gas of 50% or more in relative humidity to the cathode electrode, wherein the pores formed with the pore forming member have the pore diameter distribution comprising a first peak in the pore diameter range from 0.01 to 0.1 µm and a second peak in the pore diameter range from 0.1 to 1.0 µm in which the height of the first peak is lower than the height of the second peak.

The polymer electrolyte fuel cell of the present aspect generates electric power under a highly humidified condition, and the water content more than necessary tends to stagnate in the electrode catalyst layer in the case of electric power generation in the high current region. Accordingly, in the polymer electrolyte fuel cell of the present aspect, the height of the first peak is made lower than the height of the second peak in the pore diameter distribution of the pores formed with the pore forming member, and hence discharging of the excessive water content in the electrode catalyst layer can be carried out rapidly, and the stagnation of the water content more than necessary in the electrode catalyst layer can be prevented.

As described above, the polymer electrolyte fuel cell of the present aspect generates electric power under a highly humidified condition, and hence it is preferable that the weight ratio of the ion conducting polymer contained in the electrode catalyst layer of the cathode electrode falls within the range from 1.0 to 1.6 in relation to the carbon particles. When the weight ratio of the ion conducting polymer contained in the electrode catalyst layer of the cathode electrode is less than 1.0 in relation to the carbon particles as the catalyst carrier, a sufficient water content cannot be held. Additionally, when the weight ratio of the ion conducting polymer contained in the electrode catalyst layer of the cathode electrode exceeds 1.6 in relation to the carbon particles, a water content more than necessary sometimes stagnates in the electrode catalyst layer in the case of generating electric power in the high current region.

The electrode catalyst layer in the cathode electrode is bonded to the polymer electrolyte membrane by means of thermal transfer. Accordingly, the pores formed with the pore forming member are compressed during the above-described thermal transfer thereby reducing its pore diameter.

Accordingly, in the polymer electrolyte fuel cell of the present aspect, in order to achieve the above-described pore diameter distribution, it is preferable that the pore diameter distribution of the pores formed with the pore forming member in the electrode catalyst layer before thermal transfer comprises a third peak in the pore diameter range not less than 5 µm, and the height of the third peak is 0.18 µl/cm²·mg catalyst or more in terms of the pore volume. When the peak height of the third peak is less than 0.18 µl/cm²·mg catalyst, the pore diameter distribution becomes the one in which the height of the first peak is higher than the height of the second peak.

The above-described polymer electrolyte fuel cells, which use the electrode structures for use in a polymer electrolyte fuel cell of the above-described respective aspects of the present invention, can be used, for example, as the electric power supplies and backup power supplies for electric appliances such as personal computers, cellular phones and the like. Additionally, the polymer electrolyte fuel cells which use the electrode structures for use in a polymer electrolyte fuel cell of the present invention can be used, for example, as the motive energy for transport machines such as automobiles, ships including submarines and the like.

### BRIEF DESCRIPTION OF THE DRAWINGS

FIG. 1 is an illustrative sectional view of a membrane-electrode structure of the present embodiment;
FIG. 2 is a schematic diagram showing the production processes of the membrane-electrode structure shown in FIG. 1;
FIG. 3 shows the graphs presenting the pore diameter distributions of the pores formed in the electrode catalyst layer in the cathode electrode of a first aspect of the present embodiment;
FIG. 4 is a graph showing the relation between the weight ratio of the ion conducting binder in relation to the carbon particles and the terminal voltage in the first aspect of the present embodiment;
FIG. 5 is a graph showing the relation between the pore volume and the terminal voltage in the first aspect of the present embodiment;
FIG. 6 shows the graphs presenting the pore diameter distributions of the pores formed in the electrode catalyst layer of the cathode electrode in a second aspect of the present embodiment;
FIG. 7 is a graph showing the relation between the weight ratio of the ion conducting binder in relation to the carbon particles and the terminal voltage in the second aspect of the present embodiment; and
FIG. 8 is a graph showing the relation between the pore volume and the terminal voltage in the second aspect of the present embodiment.

### DETAILED DESCRIPTION OF THE PREFERRED EMBODIMENTS

Further detailed description will be made below of the embodiment of the present invention with reference to the accompanying drawings.

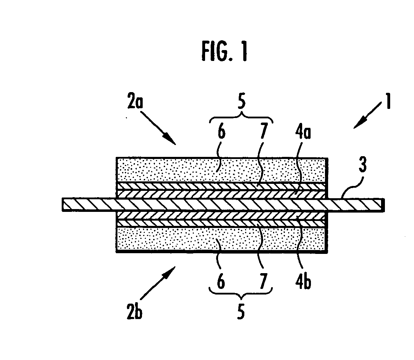

As FIG. 1 shows, a membrane-electrode structure 1 of the present embodiment comprises an anode electrode 2a, a cathode electrode 2b and a polymer electrolyte membrane 3 held between both electrodes 2a, 2b, where the polymer electrolyte membrane 3 is formed of a sulfonated polyarylene based polymer. Both electrodes 2a, 2b respectively comprise electrode catalyst layers 4a, 4b and backing layers 5, and are in contact with the polymer electrolyte membrane 3 respectively through the electrode catalyst layers 4a, 4b. Furthermore, the backing layers 5 each comprise a sheet of carbon paper 6 and a base layer 7, and the backing layers 5 are respectively in contact with the electrode catalyst layers 4a, 4b through the base layers 7.

The membrane-electrode structure 1 shown in FIG. 1 can be formed, for example, as follows.

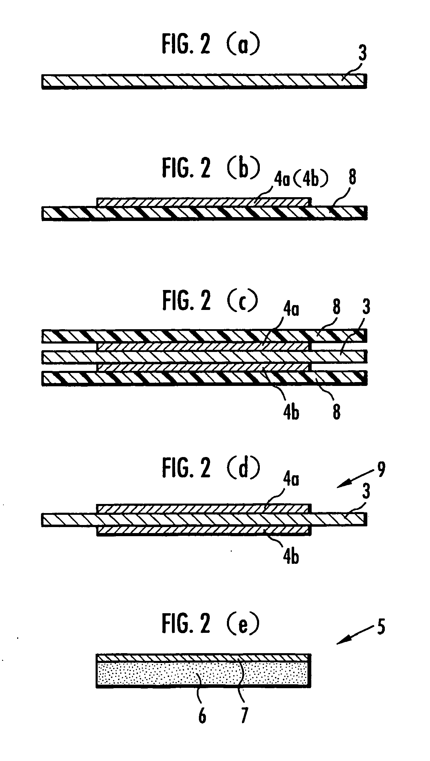

At the beginning, the polymer electrolyte membrane 3 shown in FIG. 2(a) is formed. The polymer electrolyte membrane 3 is formed in a dry film thickness of 35 µm as follows: a polymer electrolyte solution is prepared by dissolving a sulfonated polyarylene based polymer in a solvent such as N-methylpyrrolidone, and a membrane is formed from the polymer electrolyte solution by means of the cast method and dried in an oven.

Examples of the above-described sulfonated polyarylene based polymer include, for example, a sulfonated polymer obtained by adding concentrated sulfuric acid to sulfonate a polyarylene based polymer represented by the following formula (1), or a sulfonated polyarylene based polymer represented by the following formula (2):

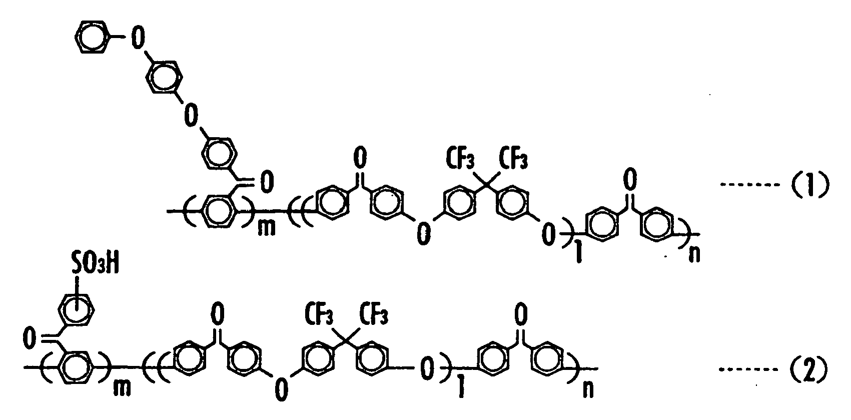

The polyarylene based polymer represented by formula (1) can be obtained by copolymerization of a monomer represented by the following formula (3) and an oligomer represented by the following formula (4):

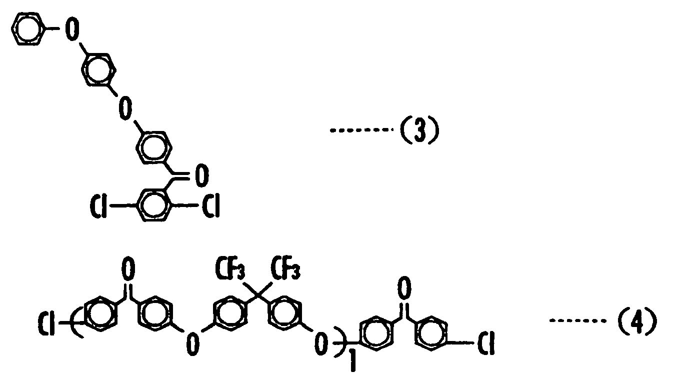

The sulfonated polyarylene based polymer represented by formula (2) can be obtained by copolymerization of a monomer represented by the following formula (5) and an oligomer represented by the above formula (4), and by subsequently hydrolyzing the sulfonic acid ester group (-SO₃CH(CH₃)C₂H₅) into the sulfonic acid group (-SO₃H):

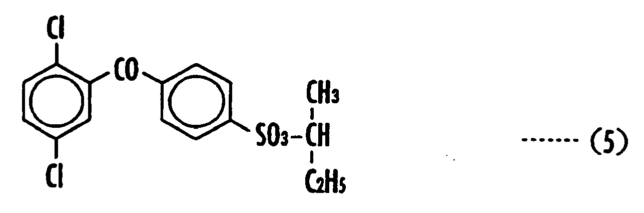

In the next place, the anode electrode catalyst layer 4a shown in FIG. 2(b) and the cathode electrode catalyst layer 4b are formed.

The anode electrode catalyst layer 4a is formed as follows. At the beginning, a catalyst particle is prepared by making carbon black (furnace black) support a platinum-ruthenium alloy. Then, a catalyst paste for anode is prepared by homogeneously dispersing the catalyst particle in an organic solvent solution of a perfluoroalkylene sulfonic acid polymer compound as the ion conducting polymer binder solution. The above-described catalyst paste for anode is prepared in such a way that the weight ratio of the carbon particles to the ion conducting polymer binder (dried) is, for example, 1:1.2 to 1:1.8. Then, as FIG. 2(b) shows, the above-described catalyst paste for anode is applied onto a releasing membrane 8 made of a fluorocarbon resin or the like, and dried to form the anode electrode catalyst layer 4a.

The cathode electrode catalyst layer 4b is formed as follows. At the beginning, a catalyst particle is prepared by making carbon black (furnace black) support a platinum particle material. Then, a catalyst paste for cathode is prepared by homogeneously dispersing the catalyst particle and a pore forming material such as carbon fiber in an organic solvent solution of a perfluoroalkylene sulfonic acid polymer compound as the ion conducting polymer binder solution. The above-described catalyst paste for cathode is prepared in such a way that the weight ratio of the carbon particles to the ion conducting polymer binder (dried) is, for example, 1:1.0 to 1:1.8. Then, as FIG. 2(b) shows, the above-described catalyst paste for cathode is applied onto a releasing membrane 8 made of a fluorocarbon resin or the like, and dried to form the cathode electrode catalyst layer 4b.

The electrode catalyst layer 4b formed as described above is formed from the catalyst paste for cathode containing carbon fiber, and hence pores are formed in the voids between the carbon fibers. The pore diameter distribution of the pores can be represented as the total sum of the pore volumes of respective pore diameters measured by means of the mercury intrusion method. The pore diameter distribution of the above-described pores comprises a first peak in the pore diameter range from 0.01 to 0.1 µm, a second peak in the pore diameter range from 0.1 to 1.0 µm, and a third peak in the pore diameter range not less than 5 µm, the height of the third peak is 0.75 µl/cm²·mg-Pt or more in terms of the pore volume.

Then, as FIG. 2(c) shows, the polymer electrolyte membrane 3 is held by a pair of the electrode catalyst layers 4a, 4b, and subjected to hot press through the intermediary of the releasing membrane 8. Consequently, the electrode catalyst layers 4a, 4b are transferred onto the polymer electrolyte membrane 3 to be bonded to the polymer electrolyte membrane 3. Then, the releasing membrane 8 is peeled off, to yield a preliminary laminate 9 in which, as FIG. 2(d) shows, the polymer electrolyte membrane 3 is held between a pair of the electrode catalyst layers 4a, 4b.

The pore diameter distribution of the pores in the electrode catalyst layer 4b of the above-described preliminary laminate 9 is made to be such that the total sum volume of the pores falling within the pore diameter range from 0.01 to 30 µm is equal to or more than 6.0 µl/cm²·mg-Pt. The pore diameter distribution of the above-described pores comprises a first peak in the pore diameter range from 0.01 to 0.1 µm and a second peak in the pore diameter range from 0.1 to 1.0 µm.

Then, a backing layer 5 shown in FIG. 2(e) is formed. For the purpose of forming the backing layer 5, at the beginning, a mixture obtained by mixing carbon black with the polytetrafluoroethylene (PTFE) particle material is dispersed homogeneously in ethylene glycol to yield a slurry, and the slurry is applied onto one surface of a sheet of carbon paper 6 and dried. Then, onto the dried layer, another slurry is further applied in which carbon black and the above-described carbon fiber are homogeneously dispersed in an organic solvent solution of a perfluoroalkylenesulfonic acid polymer compound as the above-described ion conducting polymer binder solution, and subsequently dried.

Consequently, the backing layer 5 is formed which comprises the sheet of carbon paper 6 and the base layer 7. The base layer 7 has a two-layer structure (not shown in the figure) comprising a layer of a mixture composed of the carbon black and a PTFE particle material and a layer of a mixture composed of carbon black and the above-described carbon fiber.

Then, the preliminary laminate 9 is held between a pair of the base layers 7, 7, subjected to hot press through the intermediary of the sheet of carbon paper 6, and accordingly the backing layers 5 are respectively bonded to the electrode catalyst layers 4a, 4b through the intermediary of the base layers 7, to yield the membrane-electrode structure 1 comprising the configuration shown in FIG. 1

The membrane-electrode structure 1 can be made to operate as a polymer electrolyte fuel cell by supplying a fuel gas to the anode electrode 2a and an oxidant gas to the cathode electrode 2b.

Description will be made below of the examples and comparative examples of the present invention.

### [Example 1]

In the present example, at the beginning, in a one-liter three-necked flask equipped with a stirrer, a thermometer, a condenser tube, a Dean-Stark tube, and a three-way cock for introducing nitrogen gas, 67.3 g (0.20 mol) of 2,2-bis(4-hydroxyphenyl)-1,1,1,3,3,3-hexafluoropropane (bisphenol AF), 53.5 g (0.214 mol) of 4,4'-dichlorobenzophenone, 34.6 g (0.251 mol) of potassium carbonate, 300 ml of N,N-dimethylacetamide, and 150 ml of toluene were placed, and the mixture was heated in an oil bath under an atmosphere of nitrogen, stirred, and allowed to react at 130°C. The reaction was allowed to proceed while the water produced in the reaction was subjected to azeotropic distillation with toluene and removed from the reactant system by means of a Dean-Stark tube, and thus the water production was hardly observed after the elapsed time of about 3 hours. Accordingly, a large portion of toluene was removed by slowly elevating the temperature from 130°C to 150°C. After the reaction was continued at 150°C for 10 hours, 3.3 g (0.0133 mol) of 4,4'-dichlorobenzophenone was added, and the reaction was further continued for 5 hours.

The obtained reaction solution was allowed to stand for cooling, inorganic compound precipitates produced as byproducts were filtered and removed, and the filtrate was poured into 4 liters of methanol. The precipitated product was filtered, recovered, dried and then dissolved into 300 ml of tetrahydrofuran. With 4 liters of methanol, the solution was subjected to reprecipitation and 98 g (yield: 93%) of the oligomer represented by the following formula (4) was obtained.

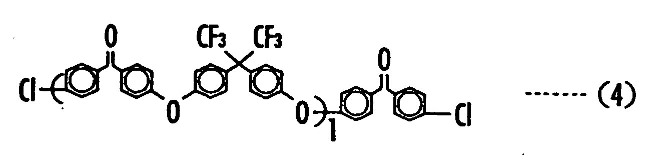

Then, 28.4 g (2.87 mmol) of the oligomer represented by formula (4), 29.2 g (67.1 mmol) of 2,5-dichloro-4'-(4-phenoxy)phenoxybenzophenone, 1.37 g (2.1 mmol) of bis(triphenylphosphine)nickel dichloride, 1.36 g (9.07 mmol) of sodium iodide, 7.34 g (28.0 mmol) of triphenylphosphine, and 11.0 g (168 mmol) of zinc dust were placed in a flask and purged with dry nitrogen gas. Then, 130 ml of N-methyl-2-pyrrolidone was added and polymerization was conducted by heating to 80°C under stirring for 4 hours. The polymerization solution was diluted with tetrahydrofuran, and coagulation was made with hydrochloric acid/methanol to recover the product. The recovered product was repeatedly washed with methanol, and dissolved into tetrahydrofuran. The solution was made to undergo reprecipitation with methanol to be purified, the polymer was filtered and collected to be dried in vacuum, and 5.07 g (yield: 96%) of a polyarylene based polymer represented by formula (1) was obtained.

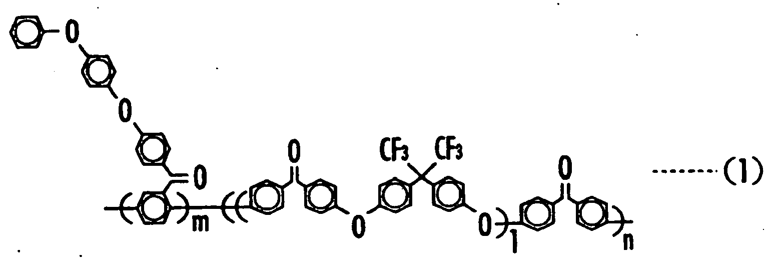

Then, concentrated sulfuric acid was added to the polyarylene based polymer represented by formula (1), to perform sulfonation so as for the ion exchange volume to be 2.1 meq/g, and thus a sulfonated polyarylene based polymer was prepared.

Then, the above-described sulfonated polyarylene compound was dissolved into N-methylpyrrolidone to prepare a polymer electrolyte solution, and a membrane was formed from the polymer electrolyte solution by means of the cast method and dried in an oven to form a polymer electrolyte membrane 1 (dry film thickness: 40 µm) shown in FIG. 2(a).

Then, a catalyst paste for anode was prepared by homogeneously dispersing 10 g of a catalyst particle (manufactured by Tanaka Kikinzoku Kogyo Co. , Ltd. , brand name: TEC61E54), prepared by making carbon black (furnace black) support a platinum-ruthenium alloy (platinum:ruthenium=1:1 (weight ratio)) in the weight ratio of carbon black to the platinum-ruthenium alloy of 46:54, in 36.8 g of a 20% organic solvent solution of a perfluoroalkylenesulfonic acid polymer compound (manufactured by Du Pont Corp., brand name: Nafion SE20192) as the ion conducting polymer binder solution.

Then, the above-described catalyst paste for anode was applied onto the fluorocarbon resin based releasing membrane 8 shown in FIG. 2(b) so as for the catalyst amount to be, for example, 0.15 mg/cm², and dried to form an anode electrolyte catalyst layer 4a.

Then, a mixture was prepared by adding 10 g of a catalyst particle (manufactured by Tanaka Kikinzoku Kogyo Co., Ltd., brand name: TEC10E50E), prepared by making carbon black (furnace black) support platinum in the weight ratio of carbon black to platinum of 50: 50, 2.5 g of a crystalline carbon fiber (manufactured by Showa Denko Co., Ltd., brand name: VGCF) as the pore forming material and 2.8 g of ethylene glycol to 35 g of a 20% organic solvent solution of a perfluoroalkylenesulfonic acid polymer compound (manufactured by Du Pont Corp., brand name: Nafion SE20192) as the ion conducting polymer binder solution. The mixture thus obtained was homogeneously dispersed by stirring for 480 minutes with a mixer at 5, 000 rpm, to prepare a catalyst paste for cathode.

Then, the above-described catalyst paste for cathode was applied onto the fluorocarbon resin based releasing membrane 8 shown in FIG. 2(b) so as for the catalyst amount to be, for example, 0.3 mg/cm², and dried to form a cathode electrolyte catalyst layer 4b. In the cathode electrode catalyst layer 4b, the weight ratio of the above-described ion conducting polymer binder (dried) to the above-described carbon particles as the carrier for the above-described catalyst particle (the weight of the ion conducting polymer binder/the weight of the carbon particles) was 1.4.

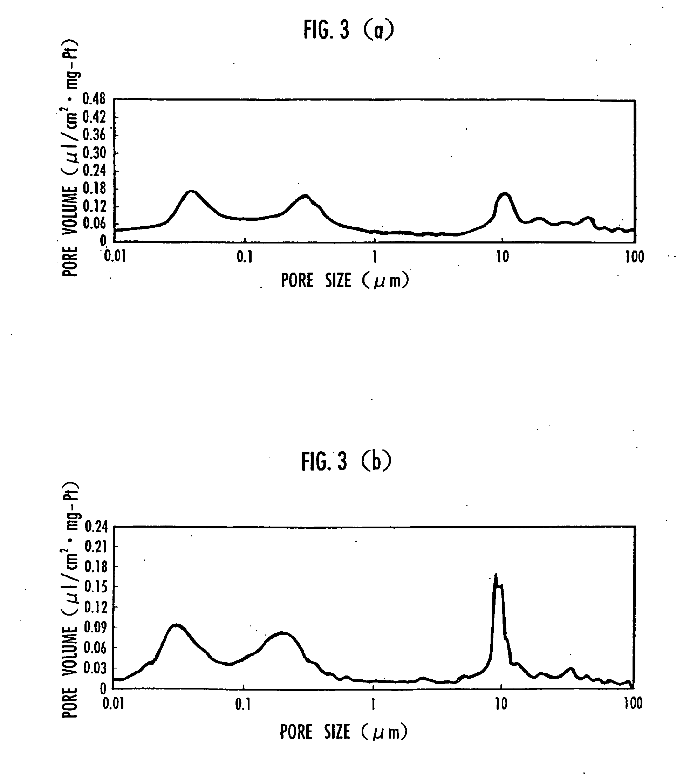

In this case, in the cathode electrode catalyst layer 4b, pores were formed in the voids between the carbon fibers, and the pores comprised a pore diameter distribution shown in FIG. 3(a). The pore diameter distribution was obtained by plotting the total sum of the pore volumes of respective pore diameters measured by the mercury intrusion method against the pore diameter. As FIG. 3(a) shows, the pore diameter distribution of the above-described pores comprised a first peak at the pore diameter of 0.05 µm, a second peak at the pore diameter of 0.3 µm, and a third peak at the pore diameter of 8 µm. The height of the third peak was 0.18 µl/cm²·mg-Pt.

Then, as FIG. 2(c) shows, the polymer electrolyte membrane 3 was held between the pair of the electrode catalyst layers 4a, 4b, and subjected to hot press through the intermediary of the releasing membrane 8. The hot press operation was conducted, for example, at 140°C for 15 minutes by exerting a surface pressure up to 4 MPa. Consequently, the electrode catalyst layers 4a, 4b were transferred onto the polymer electrolyte membrane 3, to be bonded to the polymer electrolyte membrane 3. Then, as FIG. 2(d) shows, the releasing membrane 8 was peeled off to yield a preliminary laminate 9 in which the polymer electrolyte membrane 3 was held between the pair of the electrode catalyst layers 4a, 4b.

In the cathode electrode catalyst layer 4b of the preliminary laminate 9, the above-described pores were compressed in the above-described transfer, and consequently comprised the pore diameter distribution shown in FIG. 3(b). In the pore diameter distribution, the total sum volume of the pores falling within the pore diameter range from 0.01 to 30 µm was 6.54 µl/cm²·mg-Pt. As FIG. 3(b) shows, the pore diameter distribution comprised a first peak at the pore diameter of 0.03 µm with a height of 0.09 µl/cm²·mg-Pt and a second peak at the pore diameter of 0.2 µm with a height of 0.08 µl/cm²·mg-Pt, and the height of the first peak was higher than the height of the second peak.

Then, a mixture was prepared by mixing carbon black and the polytetrafluoroethylene (PTFE) particle material in the weight ratio of, for example, 4:6, and the mixture was homogeneously dispersed in ethylene glycol to prepare a slurry. As FIG. 2(e) shows, the slurry thus obtained was applied onto one surface of a sheet of carbon paper 6 and dried. Furthermore, onto the layer thus formed, another slurry was applied which was prepared by homogeneously dispersing the carbon black and the above-described carbon fiber in the above-described organic solvent solution of the perfluoroalkylenesulfonic acid polymer compound as the ion conducting polymer binder solution, for example, in the weight ratio of the carbon black:the carbon fiber:the ion conducting polymer binder = 2:1:2, and subsequently dried to forma two-layer configuration base layer 7. Consequently, a backing layer 5 was formed which comprised the carbon paper 6 and the base layer 7.

Then, the preliminary laminate 9 was held between the pair of the base layers 7, 7, and subjected to hot press through the intermediary of the carbon paper 6. The hot press operation was conducted, for example, at 140°C for 5 minutes by exerting a surface pressure up to 3 MPa. Consequently, the backing layer 5 was bonded to the electrode catalyst layers 4a, 4b through the intermediary of the base layer 7, to yield a membrane-electrode structure 1 as shown in FIG. 1.

Then, a fuel gas was supplied to the anode electrode 2a of the membrane-electrode structure 1 obtained in the present example, an oxidant gas was supplied to the cathode electrode 2b of the same structure 1, and thus electric power generation was performed under the conditions such that the relative humidity was 25%, namely, in low humidification, the cell temperature was 80°C and the gas pressure was 100 kPa; the terminal voltage was measured at a current of 1 A/cm² and the result obtained is shown in Table 1.

### [Example 2]

In the present example, a membrane-electrode structure 1 comprising the configuration shown in FIG. 1 was formed in the same manner as that in Example 1 except that in the above-described catalyst paste for cathode, the weight of ethylene glycol was 2.4 g and the weight of the above-described 20% organic solvent solution of perfluoroalkylenesulfonic acid polymer compound was 30 g.

In the cathode electrode catalyst layer 4b of the membrane-electrode structure 1 of the present example, the weight ratio of the ion conducting polymer binder (dried) to the carbon particles as the carrier of the catalyst particles (the weight of the ion conducting polymer binder/the weight of the carbon particles) was 1.2.

The pore diameter distribution of the pores formed in the cathode electrode catalyst layer 4b was such that the total sum volume of the pores falling within the pore diameter range from 0.01 to 30 µm was 7.26 µl/cm²·mg-Pt.

A fuel gas was supplied to the anode electrode 2a of the membrane-electrode structure 1 obtained in the present example and an oxidant gas was supplied to the cathode electrode 2b of the same structure 1, the electric power generation was conducted under the same conditions as those in Example 1, and the terminal voltage was measured. The result obtained is shown in Table 1.

### [Example 3]

In the present example, a membrane-electrode structure 1 comprising the configuration shown in FIG. 1 was formed in the same manner as that in Example 1 except that in the above-described catalyst paste for cathode, the weight of the above-described 20% organic solvent solution of perfluoroalkylenesulfonic acid polymer compound was 40 g.

In the cathode electrode catalyst layer 4b of the membrane-electrode structure 1 of the present example, the weight ratio of the ion conducting polymer binder (dried) to the carbon particles as the carrier of the catalyst particles (the weight of the ion conducting polymer binder/the weight of the carbon particles) was 1.6.

The pore diameter distribution of the pores formed in the cathode electrode catalyst layer 4b was such that the total sum volume of the pores falling within the pore diameter range from 0.01 to 30 µm was 6.06 µl/cm²·mg-Pt.

A fuel gas was supplied to the anode electrode 2a of the membrane-electrode structure 1 obtained in the present example and an oxidant gas was supplied to the cathode electrode 2b of the same structure 1, the electric power generation was conducted under the same conditions as those in Example 1, and the terminal voltage was measured. The result obtained is shown in Table 1.

### [Example 4]

In the present example, a membrane-electrode structure 1 comprising the configuration shown in FIG. 1 was formed in the same manner as that in Example 1 except that in the above-described catalyst paste for cathode, the weight of the above-described 20% organic solvent solution of perfluoroalkylenesulfonic acid polymer compound was 50 g.

In the cathode electrode catalyst layer 4b of the membrane-electrode structure 1 of the present example, the weight ratio of the ion conducting polymer binder (dried) to the carbon particles as the carrier of the catalyst particles (the weight of the ion conducting polymer binder/the weight of the carbon particles) was 1.8.

The pore diameter distribution of the pores formed in the cathode electrode catalyst layer 4b was such that the total sum volume of the pores falling within the pore diameter range from 0.01 to 30 µm was 6.18 µl/cm²·mg-Pt.

A fuel gas was supplied to the anode electrode 2a of the membrane-electrode structure 1 obtained in the present example and an oxidant gas was supplied to the cathode electrode 2b of the same structure 1, the electric power generation was conducted under the same conditions as those in Example 1, and the terminal voltage was measured. The result obtained is shown in Table 1.

### [Example 5]

In the present example, a membrane-electrode structure 1 comprising the configuration shown in FIG. 1 was formed in the same manner as that in Example 1 except that in the above-described catalyst paste for cathode, the weight of the above-described crystalline carbon fiber was 3.0 g.

In the cathode electrode catalyst layer 4b of the membrane-electrode structure 1 of the present example, the weight ratio of the ion conducting polymer binder (dried) to the carbon particles as the carrier of the catalyst particles (the weight of the ion conducting polymer binder/the weight of the carbon particles) was 1.4.

The pore diameter distribution of the pores formed in the cathode electrode catalyst layer 4b was such that the total sum volume of the pores falling within the pore diameter range from 0.01 to 30 µm was 7.26 µl/cm²·mg-Pt.

A fuel gas was supplied to the anode electrode 2a of the membrane-electrode structure 1 obtained in the present example and an oxidant gas was supplied to the cathode electrode 2b of the same structure 1, the electric power generation was conducted under the same conditions as those in Example 1, and the terminal voltage was measured. The result obtained is shown in Table 1.

### [Example 6]

In the present example, a membrane-electrode structure 1 comprising the configuration shown in FIG. 1 was formed in the same manner as that in Example 1 except that in the above-described catalyst paste for cathode, the weight of ethylene glycol was 2.0 g and the weight of the above-described 20% organic solvent solution of perfluoroalkylenesulfonic acid polymer compound was 25 g.

In the cathode electrode catalyst layer 4b of the membrane-electrode structure 1 of the present example, the weight ratio of the ion conducting polymer binder (dried) to the carbon particles as the carrier of the catalyst particles (the weight of the ion conducting polymer binder/the weight of the carbon particles) was 1.0.

The pore diameter distribution of the pores formed in the cathode electrode catalyst layer 4b was such that the total sum volume of the pores falling within the pore diameter range from 0.01 to 30 µm was 8.52 µl/cm²·mg-Pt.

A fuel gas was supplied to the anode electrode 2a of the membrane-electrode structure 1 obtained in the present example and an oxidant gas was supplied to the cathode electrode 2b of the same structure 1, the electric power generation was conducted under the same conditions as those in Example 1, and the terminal voltage was measured. The result obtained is shown in Table 1.

### [Example 7]

In the present example, a membrane-electrode structure 1 comprising the configuration shown in FIG. 1 was formed in the same manner as that in Example 1 except that in the above-described catalyst paste for cathode, ethylene glycol was not added at all.

In the cathode electrode catalyst layer 4b of the membrane-electrode structure 1 of the present example, the weight ratio of the ion conducting polymer binder (dried) to the carbon particles as the carrier of the catalyst particles (the weight of the ion conducting polymer binder/the weight of the carbon particles) was 1.4.

The pore diameter distribution of the pores formed in the cathode electrode catalyst layer 4b was such that the total sum volume of the pores falling within the pore diameter range from 0.01 to 30 µm was 6.54 µl/cm²·mg-Pt.

A fuel gas was supplied to the anode electrode 2a of the membrane-electrode structure 1 obtained in the present example and an oxidant gas was supplied to the cathode electrode 2b of the same structure 1, the electric power generation was conducted under the same conditions as those in Example 1, and the terminal voltage was measured. The result obtained is shown in Table 1.

### [Example 8]

In the present example, a membrane-electrode structure 1 comprising the configuration shown in FIG. 1 was formed in the same manner as that in Example 1 except that in the preparation of the above-described catalyst paste for cathode , ethylene glycol was not added at all and stirring was conducted by means of a ball mill for 180 minutes at 75 rpm.

In the cathode electrode catalyst layer 4b of the membrane-electrode structure 1 of the present example, the weight ratio of the ion conducting polymer binder (dried) to the carbon particles as the carrier of the catalyst particles (the weight of the ion conducting polymer binder/the weight of the carbon particles) was 1.4.

The pore diameter distribution of the pores formed in the cathode electrode catalyst layer 4b was such that the total sum volume of the pores falling within the pore diameter range from 0.01 to 30 µm was 6.66 µl/cm²·mg-Pt.

A fuel gas was supplied to the anode electrode 2a of the membrane-electrode structure 1 obtained in the present example and an oxidant gas was supplied to the cathode electrode 2b of the same structure 1, the electric power generation was conducted under the same conditions as those in Example 1, and the terminal voltage was measured. The result obtained is shown in Table 1.

### [Example 9]

In the present example, a membrane-electrode structure 1 comprising the configuration shown in FIG. 1 was formed in the same manner as that in Example 1 except that in the above-described catalyst paste for cathode, the weight of the above-described crystalline carbon fiber as the pore forming material was 3.5 g and the weight of the above-described ion conducting polymer binder solution was 50 g.

In the cathode electrode catalyst layer 4b of the membrane-electrode structure 1 of the present example, the weight ratio of the ion conducting polymer binder (dried) to the carbon particles as the carrier of the catalyst particles (the weight of the ion conducting polymer binder/the weight of the carbon particles) was 2.0.

The pore diameter distribution of the pores formed in the cathode electrode catalyst layer 4b was such that the total sum volume of the pores falling within the pore diameter range from 0.01 to 30 µm was 6.18 µl/cm²·mg-Pt.

A fuel gas was supplied to the anode electrode 2a of the membrane-electrode structure 1 obtained in the present example and an oxidant gas was supplied to the cathode electrode 2b of the same structure 1, the electric power generation was conducted under the same conditions as those in Example 1, and the terminal voltage was measured. The result obtained is shown in Table 1.

### [Comparative Example 1]

In the present comparative example, a membrane-electrode structure 1 comprising the configuration shown in FIG. 1 was formed in the same manner as that in Example 1 except that in the above-described catalyst paste for cathode, the weight of the above-described crystalline carbon fiber was 1.5 g.

In the cathode electrode catalyst layer 4b of the membrane-electrode structure 1 of the present comparative example, the weight ratio of the ion conducting polymer binder (dried) to the carbon particles as the carrier of the catalyst particles (the weight of the ion conducting polymer binder/the weight of the carbon particles) was 1.4.

The pore diameter distribution of the pores formed in the cathode electrode catalyst layer 4b was such that the total sum volume of the pores falling within the pore diameter range from 0.01 to 30 µm was 5.10 µl/cm²·mg-Pt.

A fuel gas was supplied to the anode electrode 2a of the membrane-electrode structure 1 obtained in the present comparative example and an oxidant gas was supplied to the cathode electrode 2b of the same structure 1, the electric power generation was conducted under the same conditions as those in Example 1, and the terminal voltage was measured. The result obtained is shown in Table 1.

**[Table 1]**

| | PE/C | Total sum pore volume (µl/cm²·mg-Pt) | Terminal voltage (V) |
|---|---|---|---|
| Example 1 | 1.4 | 6.54 | 0.63 |
| Example 2 | 1.2 | 7.26 | 0.61 |
| Example 3 | 1.6 | 6.06 | 0.64 |
| Example 4 | 1.8 | 6.18 | 0.62 |
| Example 5 | 1.4 | 7.26 | 0.64 |
| Example 6 | 1.0 | 8.52 | 0.52 |
| Example 7 | 1.4 | 6.54 | 0.56 |
| Example 8 | 1.4 | 6.66 | 0.54 |
| Example 9 | 2.0 | 6.18 | 0.58 |
| Comparative Example 1 | 1.4 | 5.10 | 0.48 |

| | | | |
|---|---|---|---|
| PE/C ... Weight of the ion conducting polymer binder/weight of carbon particles. Total sum pore volume ... The total sum volume of the pores falling within the pore diameter range from 0.01 to 30 µm. | | | |

As can be clearly seen from Table 1, according to the polymer electrolyte fuel cells of Examples 1 to 9 in which in the cathode electrode catalyst layer 4b, the ratio of the weight of the ion conducting polymer binder/the weight of the carbon particles falls within the range from 1.0 to 1.8, and the total sum volume of the pores within the pore diameter range from 0.01 to 30 µm falls in the range not less than 6.0 µl/cm²·mg-Pt, even under a low humidified condition, the terminal voltage is higher than that of the polymer electrolyte fuel cell of Comparative Example 1 and excellent electric power generation performance can be obtained.

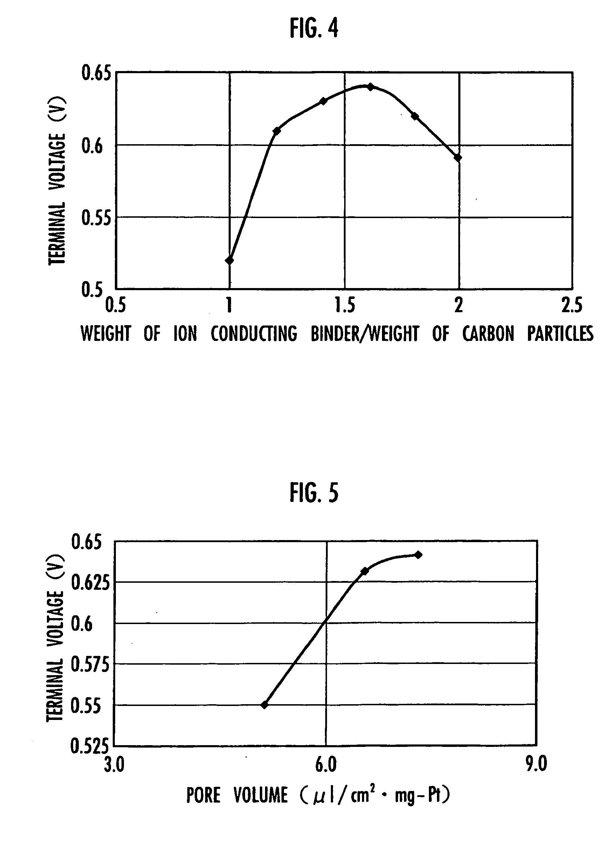

FIG. 4 shows the relation between the ratio of the weight of the ion conducting polymer binder/the weight of the carbon particles in the cathode electrode catalyst layer 4b and the terminal voltage in the polymer electrolyte fuel cells of Examples 1 to 4, 6 and 9. As can be clearly seen from FIG. 4, when the ratio of the weight of the ion conducting polymer binder/the weight of the carbon particles falls within the range from 1.2 to 1.8, the terminal voltage exceeds 0.60 V, and particularly, excellent electric power generation performance can be obtained under a low humidified condition.

FIG. 5 shows the relation between the total sum volume of the pores in the cathode electrode catalyst layer 4b within the pore diameter range from 0.01 to 30 µm and the terminal voltage in the polymer electrolyte fuel cells in Examples 1 and 5 and Comparative Example 1. As can be clearly seen from FIG. 5, when the total sum volume of the pores within the range from 0.01 to 30 µm falls in the range not less than 6.0 µl/cm²·mg-Pt, the terminal voltage exceeds 0.60 V and particularly, excellent electric power generation performance can be obtained under a low humidified condition.

### [Example 10]

In the present example, at the beginning, a polyarylene based polymer represented by formula (1) was prepared in the same manner as that in Example 1, and concentrated sulfuric acid was added to the polyarylene based polymer to perform sulfonation so as for the ion exchange volume to be 2.1 meq/g, and thus a sulfonated polyarylene based polymer was prepared.

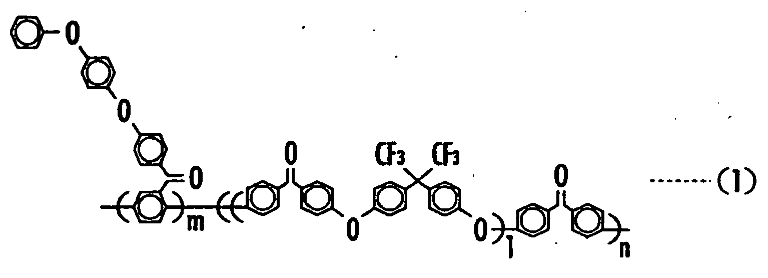

Then, the above-described sulfonated polyarylene compound was dissolved into N-methylpyrrolidone to prepare a polymer electrolyte solution, and a membrane was formed from the polymer electrolyte solution by means of the cast method and dried in an oven to form a polymer electrolyte membrane 1 (dry film thickness: 40 µm) shown in FIG. 2(a).

Then, a catalyst paste for anode was prepared by homogeneously dispersing 10 g of a catalyst particle ( manufactured by Tanaka Kikinzoku Kogyo Co . , Ltd. , brand name: TEC61E54), prepared by making carbon black (furnace black) support a platinum-ruthenium alloy (platinum:ruthenium=1:1(weight ratio)) in the weight ratio of carbon black to the platinum-ruthenium alloy of 46:54, in 36.8 g of a 20% organic solvent solution of a perfluoroalkylenesulfonic acid polymer compound (manufactured by Du Pont Corp., brand name: Nafion SE20192) as the ion conducting polymer binder solution.

Then, the above-described catalyst paste for anode was applied onto the fluorocarbon resin based releasing membrane 8 shown in FIG. 2(b) so as for the catalyst amount to be, for example, 0.15 mg/cm², and dried to form an anode electrolyte catalyst layer 4a.

Then, a mixture was prepared by adding 10 g of a catalyst particle (manufactured by Tanaka Kikinzoku Kogyo Co., Ltd., brand name: TEC10E50E), prepared by making carbon black (furnace black) support platinum in the weight ratio of carbon black to platinum of 50:50 and 2.5 g of a crystalline carbon fiber as the pore forming member (manufactured by Showa Denko Co., Ltd., brand name: VGCF) to 35 g of a 20% organic solvent solution of a perfluoroalkylenesulfonic acid polymer compound (manufactured by Du Pont Corp., brand name: Nafion SE20192) as the ion conducting polymer binder solution. The mixture thus obtained was homogeneously dispersed by stirring for 480 minutes with a mixer at 5,000 rpm, to prepare a catalyst paste for cathode.

Then, the above-described catalyst paste for cathode was applied onto the fluorocarbon resin based releasing membrane 8 shown in FIG. 2(b) so as for the catalyst amount to be, for example, 0.3 mg/cm², and dried to form a cathode electrolyte catalyst layer 4b. In the cathode electrode catalyst layer 4b, the weight ratio of the above-described ion conducting polymer binder (dried) to the above-described carbon particles as the carrier of the above-described catalyst particles (the weight of the ion conducting polymer binder/the weight of the carbon particles) was 1.4.

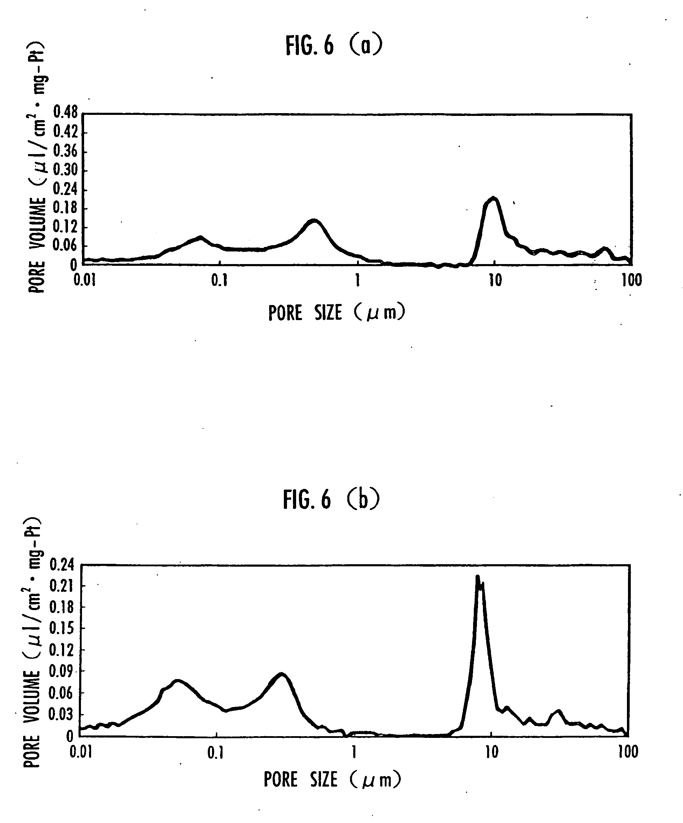

In this case, in the cathode electrode catalyst layer 4b, pores were formed in the voids between the carbon fibers, and the pores comprised a pore diameter distribution shown in FIG. 6(a). The pore diameter distribution was obtained by plotting the total sum of the pore volumes of respective pore diameters measured by the mercury intrusion method against the pore diameter. As FIG. 6(a) shows, the pore diameter distribution of the above-described pores comprised a first peak at the pore diameter of 0.05 µm, a second peak at the pore diameter of 0. 48 µm, and a third peak at the pore diameter of 9 µm. The height of the third peak was 0.348 µl/cm²·mg-Pt.

Then, as FIG. 2(c) shows, the polymer electrolyte membrane 3 was held between the pair of the electrode catalyst layers 4a, 4b, and subjected to hot press through the intermediary of the releasing membrane 8. The hot press operation was conducted, for example, at 140°C for 15 minutes by exerting a surface pressure up to 4 MPa. Consequently, the electrode catalyst layers 4a, 4b were transferred onto the polymer electrolyte membrane 3, to be bonded to the polymer electrolyte membrane 3. Then, as FIG. 2(d) shows, the releasing membrane 8 was peeled off to yield a preliminary laminate 9 in which the polymer electrolyte membrane 3 was held between the pair of the electrode catalyst layers 4a, 4b.

In the cathode electrode catalyst layer 4b of the preliminary laminate 9, the above-described pores were compressed in the above-described transfer, and consequently comprised the pore diameter distribution shown in FIG. 6(b). In the pore diameter distribution, the total sum volume of the pores falling in the pore diameter range from 0.01 to 30 µm was 6.344 µl/cm²·mg-Pt. As FIG. 6(b) shows, the pore diameter distribution comprised a first peak at the pore diameter of 0.058 µm with a height of 0. 0808 µl/cm²·mg-Pt and a second peak at the pore diameter of 0.402 µm with a height of 0.0972 µl/cm²·mg-Pt, and the height of the first peak was lower than the height of the second peak.

Then, a mixture was prepared by mixing carbon black and the polytetrafluoroethylene (PTFE) particle material in the weight ratio of, for example, 6:4, and the mixture was homogeneously dispersed in ethylene glycol to prepare a slurry. As FIG. 2(e) shows, the slurry thus obtained was applied onto one surface of a sheet of carbon paper 6 and dried. Furthermore, onto the layer thus formed, another slurry was applied which was prepared by homogeneously dispersing the carbon black and the above-described carbon fiber in the above-described organic solvent solution of the perfluoroalkylenesulfonic acid polymer compound as the ion conducting polymer binder solution, for example, in the weight ratio of the carbon black:the carbon fiber:the ion conducting polymer binder = 2:1:2, and subsequently dried to form a two-layer configuration base layer 7. Consequently, a backing layer 5 was formed which comprised the carbon paper 6 and the base layer 7.

Then, the preliminary laminate 9 was held between the pair of the base layers 7, 7, and subjected to hot press through the intermediary of the carbon paper 6. The hot press operation was conducted, for example, at 140°C for 15 minutes by exerting a surface pressure up to 4 MPa. Consequently, the backing layer 5 was bonded to the electrode catalyst layers 4a, 4b through the intermediary of the base layer 7, to yield a membrane-electrode structure 1 as shown in FIG. 1.

Then, a fuel gas was supplied to the anode electrode 2a of the membrane-electrode structure 1 obtained in the present example, an oxidant gas was supplied to the cathode electrode 2b of the same structure 1, and thus electric power generation was performed under the conditions such that the relative humidity was 100%, namely, in high humidification (under the a highly humidified condition (1)), the cell temperature was 50°C and the gas pressure was 100 kPa; the terminal voltage was measured at a current of 1 A/cm². Additionally, electric power generation was performed under the conditions such that the relative humidity was 65%, namely, in high humidification (under the a highly humidified condition (2)), the cell temperature was 70°C and the gas pressure was 100 kPa; the terminal voltage was measured at a current of 1 A/cm². Additionally, electric power generation was performed under the conditions such that the relative humidity was 35%, namely, in low humidification, the cell temperature was 70°C and the gas pressure was 100 kPa; the terminal voltage was measured at a current of 1 A/cm². The results thus obtained are shown in Table 2.

### [Example 11]

In the present example, a membrane-electrode structure 1 comprising the configuration shown in FIG. 1 was formed in the same manner as that in Example 10 except that in the above-described catalyst paste for cathode, the weight of the above-described 20% organic solvent solution of perfluoroalkylenesulfonic acid polymer compound was 30 g.

In the cathode electrode catalyst layer 4b of the membrane-electrode structure 1 of the present example, the weight ratio of the ion conducting polymer binder (dried) to the carbon particles as the carrier of the catalyst particles (the weight of the ion conducting polymer binder/the weight of the carbon particles) was 1.2.

The pore diameter distribution of the pores formed in the cathode electrode catalyst layer 4b was such that the total sum volume of the pores falling within the pore diameter range from 0.01 to 30 µm was 7.26 µl/cm²·mg-Pt.

A fuel gas was supplied to the anode electrode 2a of the membrane-electrode structure 1 obtained in the present example and an oxidant gas was supplied to the cathode electrode 2b of the same structure 1, the electric power generation was conducted under the same conditions as those in Example 10, and the terminal voltage was measured. The result obtained is shown in Table 2.

### [Example 12]

In the present example, a membrane-electrode structure 1 comprising the configuration shown in FIG. 1 was formed in the same manner as that in Example 10 except that in the above-described catalyst paste for cathode, the weight of the above-described 20% organic solvent solution of perfluoroalkylenesulfonic acid polymer compound was 25 g.

In the cathode electrode catalyst layer 4b of the membrane-electrode structure 1 of the present example, the weight ratio of the ion conducting polymer binder (dried) to the carbon particles as the carrier of the catalyst particles (the weight of the ion conducting polymer binder/the weight of the carbon particles) was 1.0.

The pore diameter distribution of the pores formed in the cathode electrode catalyst layer 4b was such that the total sum volume of the pores falling within the pore diameter range from 0.01 to 30 µm was 8.04 µl/cm²·mg-Pt.

A fuel gas was supplied to the anode electrode 2a of the membrane-electrode structure 1 obtained in the present example and an oxidant gas was supplied to the cathode electrode 2b of the same structure 1, the electric power generation was conducted under the same conditions as those in Example 10, and the terminal voltage was measured. The result obtained is shown in Table 2.

### [Example 13]

In the present example, a membrane-electrode structure 1 comprising the configuration shown in FIG. 1 was formed in the same manner as that in Example 10 except that in the above-described catalyst paste for cathode, the weight of the above-described 20% organic solvent solution of perfluoroalkylenesulfonic acid polymer compound was 40 g.

In the cathode electrode catalyst layer 4b of the membrane-electrode structure 1 of the present example, the weight ratio of the ion conducting polymer binder (dried) to the carbon particles as the carrier of the catalyst particles (the weight of the ion conducting polymer binder/the weight of the carbon particles) was 1.6.

The pore diameter distribution of the pores formed in the cathode electrode catalyst layer 4b was such that the total sum volume of the pores falling within the pore diameter range from 0.01 to 30 µm was 6.06 µl/cm²·mg-Pt.

A fuel gas was supplied to the anode electrode 2a of the membrane-electrode structure 1 obtained in the present example and an oxidant gas was supplied to the cathode electrode 2b of the same structure 1, the electric power generation was conducted under the same conditions as those in Example 10, and the terminal voltage was measured. The result obtained is shown in Table 2.

### [Example 14]

In the present example, a membrane-electrode structure 1 comprising the configuration shown in FIG. 1 was formed in the same manner as that in Example 10 except that in the preparation of the above-described catalyst paste for cathode, stirring was conducted by means of a ball mill for 120 minutes at 150 rpm.

In the cathode electrode catalyst layer 4b of the membrane-electrode structure 1 of the present example, the weight ratio of the ion conducting polymer binder (dried) to the carbon particles as the carrier of the catalyst particles (the weight of the ion conducting polymer binder/the weight of the carbon particles) was 1.4.

The pore diameter distribution of the pores formed in the cathode electrode catalyst layer 4b was such that the total sum volume of the pores falling within the pore diameter range from 0.01 to 30 µm was 6.66 µl/cm²·mg-Pt.

A fuel gas was supplied to the anode electrode 2a of the membrane-electrode structure 1 obtained in the present example and an oxidant gas was supplied to the cathode electrode 2b of the same structure 1, the electric power generation was conducted under the same conditions as those in Example 10, and the terminal voltage was measured. The result obtained is shown in Table 2.

### [Example 15]

In the present example, a membrane-electrode structure 1 comprising the configuration shown in FIG. 1 was formed in the same manner as that in Example 10 except that in the preparation of the above-described catalyst paste for cathode, stirring was conducted by means of a ball mill for 480 minutes at 150 rpm.

In the cathode electrode catalyst layer 4b of the membrane-electrode structure 1 of the present example, the weight ratio of the ion conducting polymer binder (dried) to the carbon particles as the carrier of the catalyst particles (the weight of the ion conducting polymer binder/the weight of the carbon particles) was 1.4.

The pore diameter distribution of the pores formed in the cathode electrode catalyst layer 4b was such that the total sum volume of the pores falling within the pore diameter range from 0.01 to 30 µm was 6.66 µl/cm²·mg-Pt.

A fuel gas was supplied to the anode electrode 2a of the membrane-electrode structure 1 obtained in the present example and an oxidant gas was supplied to the cathode electrode 2b of the same structure 1, the electric power generation was conducted under the same conditions as those in Example 10, and the terminal voltage was measured. The result obtained is shown in Table 2.

### [Example 16]

In the present example, a membrane-electrode structure 1 comprising the configuration shown in FIG. 1 was formed in the same manner as that in Example 10 except that in the above-described catalyst paste for cathode, the weight of the carbon fiber was 3.5 g and the weight of the above-described 20% organic solvent solution of perfluoroalkylenesulfonic acid polymer compound was 45 g.

In the cathode electrode catalyst layer 4b of the membrane-electrode structure 1 of the present example, the weight ratio of the ion conducting polymer binder (dried) to the carbon particles as the carrier of the catalyst particles (the weight of the ion conducting polymer binder/the weight of the carbon particles) was 1.8.

The pore diameter distribution of the pores formed in the cathode electrode catalyst layer 4b was such that the total sum volume of the pores falling within the pore diameter range from 0.01 to 30 µm was 6.18 µl/cm²·mg-Pt.

A fuel gas was supplied to the anode electrode 2a of the membrane-electrode structure 1 obtained in the present example and an oxidant gas was supplied to the cathode electrode 2b of the same structure 1, the electric power generation was conducted under the same conditions as those in Example 10, and the terminal voltage was measured. The result obtained is shown in Table 2.

### [Comparative Example 2]

In the present comparative example, a membrane-electrode structure 1 comprising the configuration shown in FIG. 1 was formed in the same manner as that in Example 10 except that in the above-described catalyst paste for cathode, the weight of the above-described 20% organic solvent solution of perfluoroalkylenesulfonic acid polymer compound was 20 g.

In the cathode electrode catalyst layer 4b of the membrane-electrode structure 1 of the present comparative example, the weight ratio of the ion conducting polymer binder (dried) to the carbon particles as the carrier of the catalyst particle (the weight of the ion conducting polymer binder/the weight of the carbon particles) was 0.8.

The pore diameter distribution of the pores formed in the cathode electrode catalyst layer 4b was such that the total sum volume of the pores falling within the pore diameter range from 0.01 to 30 µm was 8.52 µl/cm²·mg-Pt.

A fuel gas was supplied to the anode electrode 2a of the membrane-electrode structure 1 obtained in the present comparative example and an oxidant gas was supplied to the cathode electrode 2b of the same structure 1, the electric power generation was conducted under the same conditions as those in Example 10, and the terminal voltage was measured. The result obtained is shown in Table 2.

### [Comparative Example 3]

In the present comparative example, a membrane-electrode structure 1 comprising the configuration shown in FIG. 1 was formed in the same manner as that in Example 10 except that in the above-described catalyst paste for cathode, the weight of the above-described carbon fiber was 1.5 g.

In the cathode electrode catalyst layer 4b of the membrane-electrode structure 1 of the present comparative example, the weight ratio of the ion conducting polymer binder (dried) to the carbon particles as the carrier of the catalyst particles (the weight of the ion conducting polymer binder/the weight of the carbon particles) was 1.4.

The pore diameter distribution of the pores formed in the cathode electrode catalyst layer 4b was such that the total sum volume of the pores falling within the pore diameter range from 0.01 to 30 µm was 5.22 µl/cm²·mg-Pt.

A fuel gas was supplied to the anode electrode 2a of the membrane-electrode structure 1 obtained in the present comparative example and an oxidant gas was supplied to the cathode electrode 2b of the same structure 1, the electric power generation was conducted under the same conditions as those in Example 10, and the terminal voltage was measured. The result obtained is shown in Table 2.

**[Table 2]**

| | PE/C | Total sum pore volume (µl/cm²·mg-Pt) | Terminal voltage under a highly humidified condition (1) (V) | Terminal voltage under a highly humidified condition (2) (V) | Terminal voltage under a low humidified condition (V) |
|---|---|---|---|---|---|
| Example 10 | 1.4 | 6.54 | 0.62 | 0.65 | 0.63 |
| Example 11 | 1.2 | 7.26 | 0.63 | 0.63 | 0.61 |
| Example 12 | 1.0 | 8.04 | 0.65 | 0.62 | 0.60 |
| Example 13 | 1.6 | 6.06 | 0.60 | 0.61 | 0.64 |
| Example 14 | 1.4 | 6.66 | 0.52 | 0.58 | 0.60 |
| Example 15 | 1.4 | 6.66 | 0.53 | 0.58 | 0.62 |
| Example 16 | 1.8 | 6.18 | 0.48 | 0.58 | 0.66 |
| Comparative Example 2 | 0.8 | 8.52 | 0.66 | 0.61 | 0.52 |
| Comparative Example 3 | 1.4 | 5.22 | 0.48 | 0.56 | 0.61 |

| | | | | | |
|---|---|---|---|---|---|
| PE/C ... Weight of the ion conducting polymer binder/weight of the carbon particles. Total sum pore volume ... The total sum volume of the pores falling within the pore diameter range from 0.01 to 30 µm. | | | | | |

As can be clearly seen from Table 2, according to the polymer electrolyte fuel cells of Examples 10 to 16 in which in the cathode electrode catalyst layer 4b, the ratio of the weight of the ion conducting polymer binder/the weight of the carbon particles falls within the range from 1.0 to 1.8, and the total sum volume of the pores within the pore diameter range from 0.01 to 30 µm falls in the range not less than 6.0 µl/cm²·mg-Pt, of course under a low humidified condition and even under a highly humidified condition, the terminal voltage is high and excellent electric power generation performance can be obtained. On the contrary, as can be clearly seen, according to the polymer electrolyte fuel cell of Comparative Example 2 in which the ratio of the weight of the ion conducting polymer binder/the weight of the carbon particles is 0.8, the terminal voltage under a low humidified condition is lower than those in the polymer electrolyte fuel cells of the Examples 10 to 16. Additionally, as can be clearly seen, according to the polymer electrolyte fuel cell of Comparative Example 3 in which the total sum volume of the pores falling within the pore diameter range from 0.01 to 30 µm is 5.22 µl/cm²·mg-Pt, the terminal voltage under a highly humidified condition is lower than those in the polymer electrolyte fuel cells of the Examples 10 to 16.

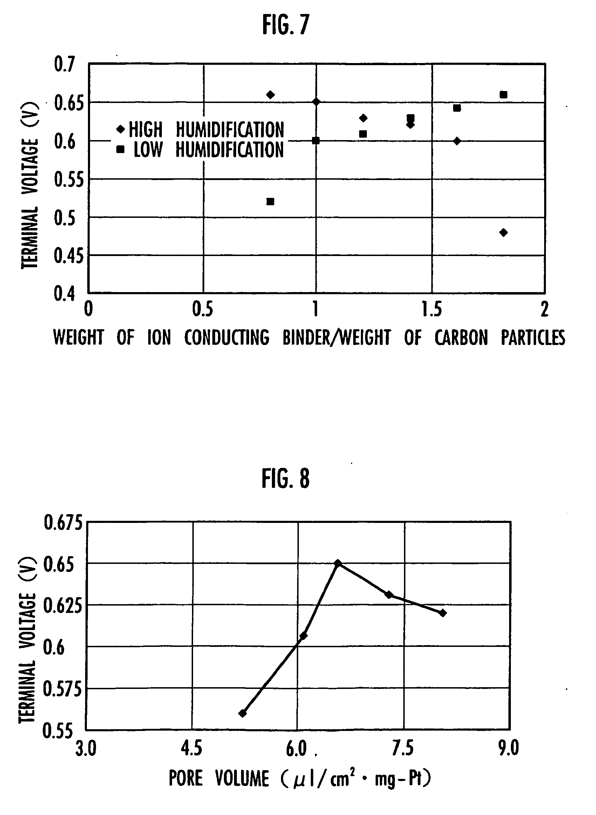

FIG. 7 shows the relation between the ratio of the weight of the ion conducting polymer binder/the weight of the carbon particles in the cathode electrode catalyst layer 4b and the terminal voltage under the a highly humidified condition of 100% in relative humidity, in the polymer electrolyte fuel cells of Examples 10 to 13 and 16, and Comparative Example 2. As can be clearly seen from FIG. 7, when the ratio of the weight of the ion conducting polymer binder/the weight of the carbon particles falls within the range from 1.0 to 1.6, the terminal voltage exceeds 0.60 V, and particularly, excellent electric power generation performance can be obtained under the a highly humidified condition.

FIG. 8 shows the relation between the total sum volume of the pores in the cathode electrode catalyst layer 4b within the pore diameter range from 0.01 to 30 µm and the terminal voltage under the a highly humidified condition of 65% in relative humidity in the polymer electrolyte fuel cells in Examples 10 to 13 and Comparative Example 3. As can be clearly seen from FIG. 8, when the total sum volume of the pores within the pore diameter range from 0.01 to 30 µm falls in the range not less than 6.0 µl/cm²·mg-Pt, the terminal voltage exceeds 0.60 V and particularly, excellent electric power generation performance can be obtained under a highly humidified condition.

A membrane-electrode structure capable of exhibiting excellent electric power generation performance even in a high current region and a polymer electrolyte fuel cell using the membrane-electrode structure are provided. Additionally, electric appliances and transport machines each using the above-described polymer electrolyte fuel cell are provided. The membrane-electrode structure comprises an anode electrode 2a, a cathode electrode 2b and a polymer electrolyte membrane 3 made of a sulfonated polyarylene based polymer and held between both electrodes 2a, 2b. The cathode electrode 2b comprises an electrode catalyst layer 4b containing a catalyst particle having the catalyst loaded on the carbon particles, a pore forming member and an ion conducting polymer falling within the weight ratio range from 1.0 to 1.8 in relation to said carbon particles, and is in contact with the polymer electrolyte membrane 3 through the electrode catalyst layer 4b. The electrode catalyst layer 4b has a total sum volume of the pores falling within the pore diameter range from 0.01 to 30 µm, of the pores formed by the pore forming member, equal to or more than 6.0 µl/cm²·mg catalyst. The pores formed by said pore forming member have a first peak falling within the pore diameter range from 0.01 to 0.1 µm and a second peak falling within the pore diameter range from 0.1 to 1.0 µm.

## Claims

1. A membrane-electrode structure comprising an anode electrode, a cathode electrode and a polymer electrolyte membrane made of a sulfonated polyarylene based polymer and held between both electrodes,
wherein:
said cathode electrode comprises an electrode catalyst layer containing a catalyst particle having the catalyst loaded on the carbon particles, a carbon fiber as a pore forming member and an ion conducting polymer of the weight ratio falling within the range from 1.0 to 1.8 in relation to said carbon particles, and is in contact with said polymer electrolyte membrane through said electrode catalyst layer; and
said electrode catalyst layer has a total sum volume of pores falling within the pore diameter range from 0.01 to 30 µm of pores formed by said carbon fiber and being equal to or more than 6.0 µl/cm²· mg catalyst.

2. The membrane-electrode structure according to claim 1,
wherein the pores formed by said carbon fiber have a pore diameter distribution comprising a first peak falling within the pore diameter range from 0.01 to 0.1 µm and a second peak falling within the pore diameter range from 0.1 to 1.0 µm.

3. A polymer electrolyte fuel cell in which in the membrane-electrode structure according to claim 1 comprising an anode electrode, a cathode electrode and a polymer electrolyte membrane made of a sulfonated polyarylene based polymer and held between both electrodes, a fuel gas is supplied to said anode electrode, an oxidant gas less than 50% in relative humidity is supplied to said cathode electrode and electric power is thereby generated under a low humidified condition, wherein:
said cathode electrode comprises an electrode catalyst layer containing a catalyst particle having the catalyst loaded on the carbon particles, a carbon fiber and an ion conducting polymer of the weight ratio falling within the range from 1.0 to 1.8 in relation to said carbon particles, and is in contact with said polymer electrolyte membrane through said electrode catalyst layer;
said electrode catalyst layer has a total sum volume of the pores falling within the pore diameter range from 0.01 to 30 µm, of the pores formed by said carbon fiber, equal to or more than 6.0 µl/cm² · mg catalyst; and
the pores formed by said carbon fiber have a pore diameter distribution comprising a first peak falling within the pore diameter range from 0.01 to 0.1 µm and a second peak falling within the pore diameter range from 0.1 to 1.0 µm, the height of said first peak being higher than the height of said second peak.

4. The polymer electrolyte fuel cell according to claim 3, wherein the ion conducting polymer contained in the electrode catalyst layer of said cathode electrode has a weight ratio falling within the range from 1.2 to 1.8 in relation to said carbon particles.

5. The polymer electrolyte fuel cell according to claim 3, wherein the electrode catalyst layer of said cathode electrode is bonded by thermal transfer to said polymer electrolyte membrane, and the pore diameter distribution of the pores formed by said carbon fiber in said electrode catalyst layer, before thermal transfer, comprises a third peak in the pore diameter range equal to or more than 5 µm, and
wherein the height of said third peak falls within the range from 0.9 to 1.8 µl/cm² · mg catalyst in terms of the pore volume.

6. An electric appliance wherein a polymer electrolyte fuel cell according to claim 3 is used in which:
in the membrane-electrode structure comprising an anode electrode, a cathode electrode and a polymer electrolyte membrane made of a sulfonated polyarylene based polymer and held between both electrodes, a fuel gas is supplied to said anode electrode, an oxidant gas less than 50% in relative humidity is supplied to said cathode electrode and electric power is thereby generated under a low humidified condition,
said cathode electrode comprises an electrode catalyst layer containing a catalyst particle having the catalyst loaded on the carbon particles, a carbon fiber and an ion conducting polymer of the weight ratio falling within the range from 1.0 to 1.8 in relation to said carbon particles, and is in contact with said polymer electrolyte membrane through said electrode catalyst layer;
said electrode catalyst layer has a total sum volume of the pores falling within the pore diameter range from 0.01 to 30 µm, of the pores formed by said carbon fiber, equal to or more than 6.0 µl/cm² · mg catalyst; and
the pores formed by said carbon fiber have a pore diameter distribution comprising a first peak falling within the pore diameter range from 0.01 to 0.1 µm and a second peak falling within the pore diameter range from 0.1 to 1.0 µm, the height of said first peak being higher than the height of said second peak.

7. A transport machine wherein a polymer electrolyte fuel cell according to claim 3 is used in which:
in the membrane-electrode structure comprising an anode electrode, a cathode electrode and a polymer electrolyte membrane made of a sulfonated polyarylene based polymer and held between both electrodes, a fuel gas is supplied to said anode electrode, an oxidant gas less than 50% in relative humidity is supplied to said cathode electrode and electric power is thereby generated under a low humidified condition,
said cathode electrode comprises an electrode catalyst layer containing a catalyst particle having the catalyst loaded on the carbon particles, a carbon fiber and an ion conducting polymer of the weight ratio falling within the range from 1.0 to 1.8 in relation to said carbon particles, and is in contact with said polymer electrolyte membrane through said electrode catalyst layer;
said electrode catalyst layer has a total sum volume of the pores falling within the pore diameter range from 0.01 to 30 µm, of the pores formed by said carbon fiber, equal to or more than 6.0 µl/cm² · mg catalyst; and
the pores formed by said carbon fiber have a pore diameter distribution comprising a first peak falling within the pore diameter range from 0.01 to 0.1 µm and a second peak falling within the pore diameter range from 0.1 to 1.0 µm, the height of said first peak being higher than the height of said second peak.

8. A polymer electrolyte fuel cell in which in the membrane-electrode structure according to claim 1 comprising an anode electrode, a cathode electrode and a polymer electrolyte membrane made of a sulfonated polyarylene based polymer and held between both electrodes, a fuel gas is supplied to said anode electrode, an oxidant gas of 50% or more in relative humidity is supplied to said cathode electrode and electric power is thereby generated under a highly humidified condition, wherein:
said cathode electrode comprises an electrode catalyst layer containing a catalyst particle having the catalyst loaded on the carbon particles, a carbon fiber and an ion conducting polymer of the weight ratio falling within the range from 1.0 to 1.8 in relation to said carbon particles, and is in contact with said polymer electrolyte membrane through said electrode catalyst layer;
said electrode catalyst layer has a total sum volume of the pores falling within the pore diameter range from 0.01 to 30 µm, of the pores formed by said carbon fiber, equal to or more than 6.0 µl/cm2 · mg catalyst; and
the pores formed by said carbon fiber have a pore diameter distribution comprising a first peak falling within the pore diameter range from 0.01 to 0.1 µm and a second peak falling within the pore diameter range from 0.1 to 1.0 µm, the height of said first peak being lower than the height of said second peak.

9. The polymer electrolyte fuel cell according to claim 8, wherein the ion conducting polymer contained in the electrode catalyst layer of said cathode electrode falls within the weight ratio range from 1.0 to 1.6 in relation to said carbon particles.

10. The polymer electrolyte fuel cell according to claim 8, wherein the electrode catalyst layer of said cathode electrode is bonded by thermal transfer to said polymer electrolyte membrane, and the pore diameter distribution of the pores formed by said carbon fiber in said electrode catalyst layer, before thermal transfer, comprises a third peak in the pore diameter range equal to or more than 5 µm, and
wherein the height of said third peak is
0.18 µl/cm²· mg catalyst or more in terms of the pore volume.

11. An electric appliance wherein a polymer electrolyte fuel cell according to claim 8 is used in which:
in the membrane-electrode structure comprising an anode electrode, a cathode electrode and a polymer electrolyte membrane made of a sulfonated polyarylene based polymer and held between both electrodes, a fuel gas is supplied to said anode electrode, an oxidant gas of 50% or more in relative humidity is supplied to said cathode electrode and electric power is thereby generated under a highly humidified condition,
wherein:
said cathode electrode comprises an electrode catalyst layer containing a catalyst particle having the catalyst loaded on the carbon particles, a carbon fiber and an ion conducting polymer of the weight ratio falling within the range from 1.0 to 1.8 in relation to said carbon particles, and is in contact with said polymer electrolyte membrane through said electrode catalyst layer;
said electrode catalyst layer has a total sum volume of the pores falling within the pore diameter range from 0.01 to 30 µm, of the pores formed by said carbon fiber, equal to or more than 6.0 µl/cm²· mg catalyst; and
the pores formed by said carbon fiber have a pore diameter distribution comprising a first peak falling within the pore diameter range from 0.01 to 0.1 µm and a second peak falling within the pore diameter range from 0.1 to 1.0 µm, the height of said first peak being lower than the height of said second peak.

12. A transport machine wherein a polymer electrolyte fuel cell according to claim 8 is used in which:
in the membrane-electrode structure comprising an anode electrode, a cathode electrode and a polymer electrolyte membrane made of a sulfonated polyarylene based polymer and held between both electrodes, a fuel gas is supplied to said anode electrode, an oxidant gas of 50% or more in relative humidity is supplied to said cathode electrode and electric power is thereby generated under a highly humidified condition,
said cathode electrode comprises an electrode catalyst layer containing a catalyst particle having the catalyst loaded on the carbon particles, a carbon fiber and an ion conducting polymer of the weight ratio falling within the range from 1.0 to 1.8 in relation to said carbon particles, and is in contact with said polymer electrolyte membrane through said electrode catalyst layer;
said electrode catalyst layer has a total sum volume of the pores falling within the pore diameter range from 0.01 to 30 µm, of the pores formed by said carbon fiber, equal to or more than 6.0 µl/cm²· mg catalyst; and
the pores formed by said carbon fiber have a pore diameter distribution comprising a first peak falling within the pore diameter range from 0.01 to 0.1 µm a second peak falling within the pore diameter range from 0.1 to 1.0 µm, the height of said first peak being lower than the height of said second peak.

## Patentansprüche

1. Membran-Elektroden-Einheit umfassend eine Anodenelektrode, eine Kathodenelektrode und eine Polymerelektrolyt-Membran, die aus einem Polymer auf Basis von
sulfoniertem Polyarylen hergestellt und zwischen beiden Elektroden gehalten wird, wobei:
die Kathodenelektrode eine Elektrodenkatalysatorschicht umfasst, die ein Katalysatorpartikel mit dem Katalysator geladen auf den Kohlenstoffpartikeln, eine Kohlenstofffaser als ein Poren bildendes Element und ein Ionen leitendes Polymer mit dem Gewichtsverhältnis, das in den Bereich von 1,0 bis 1,8 im Verhältnis zu den Kohlenstoffpartikeln fällt, enthält, und durch die Elektrodenkatalysatorschicht in Kontakt mit der Polymerelektrolyt-Membran ist; und
wobei die Elektrodenkatalysatorschicht ein Gesamtvolumen an Poren hat, das in den Porendurchmesser-Bereich von 0,01 bis 30 µm von Poren fällt, die durch die Kohlenstofffaser gebildet werden und gleich zu oder mehr als 6,0 µl/cm²· mg Katalysator ist.

2. Membran-Elektroden-Einheit nach Anspruch 1, wobei die Poren, die durch die Kohlenstofffaser gebildet werden, eine Porendurchmesserverteilung haben, die einen ersten Peak, der in den Porendurchmesser-Bereich von 0,01 bis 0,1 µm fällt, und einen zweiten Peak, der in den Porendurchmesser-Bereich von 0,1 bis 1,0 µm fällt, umfasst.

3. Polymerelektrolytbrennstoffzelle, in welcher in der Membran-Elektroden-Einheit nach Anspruch 1 umfassend eine Anodenelektrode, eine Kathodenelektrode und eine Polymerelektrolyt-Membran, die aus einem Polymer auf Basis von sulfoniertem Polyarylen hergestellt und zwischen beiden Elektroden gehalten wird, der Anodenelektrode ein Brenngas zugeführt wird, der Kathodenelektrode ein oxidierendes Gas mit weniger als 50% relativer Feuchtigkeit zugeführt wird und elektrische Energie dabei unter einer gering befeuchteten Bedingung erzeugt wird, wobei:
die Kathodenelektrode eine Elektrodenkatalysatorschicht umfasst, die ein Katalysatorpartikel mit dem Katalysator geladen auf den Kohlenstoffpartikeln, eine Kohlenstofffaser und ein Ionen leitendes Polymer mit dem Gewichtsverhältnis, das in den Bereich von 1,0 bis 1,8 im Verhältnis zu den Kohlenstoffpartikeln fällt, enthält, und durch die Elektrodenkatalysatorschicht in Kontakt mit der Polymerelektrolyt-Membran ist;
wobei die Elektrodenkatalysatorschicht ein Gesamtvolumen an Poren hat, das in den Porendurchmesser-Bereich von 0,01 bis 30 µm der Poren fällt, die durch die Kohlenstofffaser gebildet werden, gleich zu oder mehr als 6,0 µl/cm² · mg Katalysator; und
die Poren, die durch die Kohlenstofffaser gebildet werden, eine Porendurchmesserverteilung umfassend einen ersten Peak, der in den Porendurchmesser-Bereich von 0,01 bis 0,1 µm fällt und
einen zweiten Peak, der in den Porendurchmesser-Bereich von 0,1 bis 1,0 µm fällt, haben, wobei die Höhe des ersten Peaks höher ist als die Höhe des zweiten Peaks.

4. Polymerelektrolytbrennstoffzelle nach Anspruch 3, wobei das Ionen leitende Polymer, das in der Elektrodenkatalysatorschicht der Kathodenelektrode enthalten ist, ein Gewichtsverhältnis hat, das in den Bereich von 1,2 bis 1,8 im Verhältnis zu den Kohlenstoffpartikeln fällt.

5. Polymerelektrolytbrennstoffzelle nach Anspruch 3, wobei die Elektrodenkatalysatorschicht der Kathodenelektrode durch Wärmeübertragung an die Polymerelektrolyt-Membran gebunden ist, und die Porendurchmesserverteilung der Poren, die durch die Kohlenstofffaser in der Elektrodenkatalysatorschicht vor der Wärmeübertragung gebildet werden, einen dritten Peak in dem Porendurchmesser-Bereich gleich zu oder mehr als 5 µm umfasst, und
wobei die Höhe des dritten Peaks in den Bereich von 0,9 bis 1,8 µl/cm² · mg Katalysator in Bezug auf das Porenvolumen fällt.

6. Elektrogerät, wobei eine Polymerelektrolytbrennstoffzelle nach Anspruch 3 verwendet wird, wobei:
in der Membran-Elektroden-Einheit umfassend eine Anodenelektrode, eine Kathodenelektrode und eine Polymerelektrolyt-Membran, die aus einem Polymer auf Basis von sulfoniertem Polyarylen hergestellt und zwischen beiden Elektroden gehalten wird, der Anodenelektrode ein Brenngas zugeführt wird, der Kathodenelektrode ein oxidierendes Gas mit weniger als 50% relativer Feuchtigkeit zugeführt wird und
elektrische Energie dabei unter einer gering befeuchteten Bedingung erzeugt wird, wobei:
die Kathodenelektrode eine Elektrodenkatalysatorschicht umfasst, die ein Katalysatorpartikel mit dem Katalysator geladen auf den Kohlenstoffpartikeln, eine Kohlenstofffaser und ein Ionen leitendes Polymer mit dem Gewichtsverhältnis, das in den Bereich von 1,0 bis 1,8 im Verhältnis zu den Kohlenstoffpartikeln fällt, enthält, und durch die Elektrodenkatalysatorschicht in Kontakt mit der Polymerelektrolyt-Membran ist;
wobei die Elektrodenkatalysatorschicht ein Gesamtvolumen an Poren hat, das in den Porendurchmesser-Bereich von 0,01 bis 30 µm der Poren fällt, die durch die Kohlenstofffaser gebildet werden, gleich zu oder mehr als 6,0 µl/cm2 · mg Katalysator; und
die Poren, die durch die Kohlenstofffaser gebildet werden, eine Porendurchmesserverteilung umfassend einen ersten Peak, der in den Porendurchmesser-Bereich von 0,01 bis 0,1 µm fällt und einen zweiten Peak, der in den Porendurchmesser-Bereich von 0,1 bis 1,0 µm fällt, haben, wobei die Höhe des ersten Peaks höher ist als die Höhe des zweiten Peaks.

7. Transport-Vorrichtung, wobei eine Polymerelektrolytbrennstoffzelle nach Anspruch 3 verwendet wird, wobei:
in der Membran-Elektroden-Einheit umfassend eine Anodenelektrode, eine Kathodenelektrode und eine Polymerelektrolyt-Membran, die aus einem Polymer auf Basis von sulfoniertem Polyarylen hergestellt und zwischen beiden Elektroden gehalten wird, der Anodenelektrode ein Brenngas zugeführt wird, der Kathodenelektrode ein oxidierendes Gas mit weniger als 50% relativer Feuchtigkeit zugeführt wird und
elektrische Energie dabei unter einer gering befeuchteten Bedingung erzeugt wird,
wobei die Kathodenelektrode eine Elektrodenkatalysatorschicht umfasst, die ein Katalysatorpartikel mit dem Katalysator geladen auf den Kohlenstoffpartikeln, eine Kohlenstofffaser und ein Ionen leitendes Polymer mit dem Gewichtsverhältnis, das in den Bereich von 1,0 bis 1,8 im Verhältnis zu den Kohlenstoffpartikeln fällt, enthält, und durch die Elektrodenkatalysatorschicht in Kontakt mit der Polymerelektrolyt-Membran ist;
wobei die Elektrodenkatalysatorschicht ein Gesamtvolumen an Poren hat, das in den Porendurchmesser-Bereich von 0,01 bis 30 µm der Poren fällt, die durch die Kohlenstofffaser gebildet werden, gleich zu oder mehr als 6,0 µl/cm2 · mg Katalysator; und
die Poren, die durch die Kohlenstofffaser gebildet werden, eine Porendurchmesserverteilung umfassend einen ersten Peak, der in den Porendurchmesser-Bereich von 0,01 bis 0,1 µm fällt und einen zweiten Peak, der in den Porendurchmesser-Bereich von 0,1 bis 1,0 µm fällt, haben, wobei die Höhe des ersten Peaks höher ist als die Höhe des zweiten Peaks.

8. Polymerelektrolytbrennstoffzelle, in welcher in der Membran-Elektroden-Einheit nach Anspruch 1, umfassend eine Anodenelektrode, eine Kathodenelektrode und eine Polymerelektrolyt-Membran, die aus einem Polymer auf Basis von sulfoniertem Polyarylen hergestellt und zwischen beiden Elektroden gehalten wird, der Anodenelektrode ein Brenngas zugeführt wird, der Kathodenelektrode ein oxidierendes Gas mit 50% oder mehr relativer Feuchtigkeit zugeführt wird und elektrische Energie dabei unter einer stark befeuchteten Bedingung erzeugt wird, wobei:
die Kathodenelektrode eine Elektrodenkatalysatorschicht umfasst, die ein Katalysatorpartikel mit dem Katalysator geladen auf den Kohlenstoffpartikeln, eine Kohlenstofffaser und ein Ionen leitendes Polymer mit dem Gewichtsverhältnis, das in den Bereich von 1,0 bis 1,8 im Verhältnis zu den Kohlenstoffpartikeln fällt, enthält, und durch die Elektrodenkatalysatorschicht in Kontakt mit der Polymerelektrolyt-Membran ist;
wobei die Elektrodenkatalysatorschicht ein Gesamtvolumen an Poren hat, das in den Porendurchmesser-Bereich von 0,01 bis 30 µm der Poren fällt, die durch die Kohlenstofffaser gebildet werden, gleich zu oder mehr als 6,0 µl/cm2 · mg Katalysator; und
die Poren, die durch die Kohlenstofffaser gebildet werden, eine Porendurchmesserverteilung umfassend einen ersten Peak, der in den Porendurchmesser-Bereich von 0,01 bis 0,1 µm fällt und einen zweiten Peak, der in den Porendurchmesser-Bereich von 0,1 bis 1,0 µm fällt, haben, wobei die Höhe des ersten Peaks niedriger ist als die Höhe des zweiten Peaks.

9. Polymerelektrolytbrennstoffzelle nach Anspruch 8, wobei das Ionen leitende Polymer, das in der Elektrodenkatalysatorschicht der Kathodenelektrode enthalten ist, in den Gewichtsverhältnis-Bereich von 1,0 bis 1,6 im Verhältnis zu den Kohlenstoffpartikeln fällt.

10. Polymerelektrolytbrennstoffzelle nach Anspruch 8, wobei die Elektrodenkatalysatorschicht der Kathodenelektrode durch Wärmeübertragung an die Polymerelektrolyt-Membran gebunden ist, und die Porendurchmesserverteilung der Poren, die durch die Kohlenstofffaser in der Elektrodenkatalysatorschicht vor der Wärmeübertragung gebildet werden, einen dritten Peak in dem Porendurchmesser-Bereich gleich zu oder mehr als 5 µm umfasst, und
wobei die Höhe des dritten Peaks in den Bereich von 0,18 µl/cm² · mg Katalysator oder mehr in Bezug auf das Porenvolumen fällt.

11. Elektrogerät, wobei eine Polymerelektrolytbrennstoffzelle nach Anspruch 8 verwendet wird, in dem:
in der Membran-Elektroden-Einheit umfassend eine Anodenelektrode, eine Kathodenelektrode und eine Polymerelektrolyt-Membran, die aus einem Polymer auf Basis von sulfoniertem Polyarylen hergestellt und zwischen beiden Elektroden gehalten wird, der Anodenelektrode ein Brenngas zugeführt wird, der Kathodenelektrode ein oxidierendes Gas mit 50% oder mehr relativer Feuchtigkeit zugeführt wird und
elektrische Energie dabei unter einer stark befeuchteten Bedingung erzeugt wird, wobei:
die Kathodenelektrode eine Elektrodenkatalysatorschicht umfasst, die ein Katalysatorpartikel mit dem Katalysator geladen auf den Kohlenstoffpartikeln, eine Kohlenstofffaser und ein Ionen leitendes Polymer mit dem Gewichtsverhältnis, das in den Bereich von 1,0 bis 1,8 im Verhältnis zu den Kohlenstoffpartikeln fällt, enthält, und durch die Elektrodenkatalysatorschicht in Kontakt mit der Polymerelektrolyt-Membran ist;
wobei die Elektrodenkatalysatorschicht ein Gesamtvolumen an Poren hat, das in den Porendurchmesser-Bereich von 0,01 bis 30 µm der Poren fällt, die durch die Kohlenstofffaser gebildet werden, gleich zu oder mehr als 6,0 µl/cm2 · mg Katalysator; und
die Poren, die durch die Kohlenstofffaser gebildet werden, eine Porendurchmesserverteilung umfassend einen ersten Peak, der in den Porendurchmesser-Bereich von 0,01 bis 0,1 µm fällt und einen zweiten Peak, der in den Porendurchmesser-Bereich von 0,1 bis 1,0 µm fällt, haben, wobei die Höhe des ersten Peaks niedriger ist als die Höhe des zweiten Peaks.

12. Transport-Vorrichtung, wobei eine Polymerelektrolytbrennstoffzelle nach Anspruch 8 verwendet wird, in welcher:
in der Membran-Elektroden-Einheit umfassend eine Anodenelektrode, eine Kathodenelektrode und eine Polymerelektrolyt-Membran, die aus einem Polymer auf Basis von sulfoniertem Polyarylen hergestellt und zwischen beiden Elektroden gehalten wird, der Anodenelektrode ein Brenngas zugeführt wird, der Kathodenelektrode ein oxidierendes Gas mit 50% oder mehr relativer Feuchtigkeit zugeführt wird und
elektrische Energie dabei unter einer stark befeuchteten Bedingung erzeugt wird,
wobei die Kathodenelektrode eine Elektrodenkatalysatorschicht umfasst, die ein Katalysatorpartikel mit dem Katalysator geladen auf den Kohlenstoffpartikeln, eine Kohlenstofffaser und ein Ionen leitendes Polymer mit dem Gewichtsverhältnis, das in den Bereich von 1,0 bis 1,8 im Verhältnis zu den Kohlenstoffpartikeln fällt, enthält, und durch die Elektrodenkatalysatorschicht in Kontakt mit der Polymerelektrolyt-Membran ist;
wobei die Elektrodenkatalysatorschicht ein Gesamtvolumen an Poren hat, das in den Porendurchmesser-Bereich von 0,01 bis 30 µm der Poren fällt, die durch die Kohlenstofffaser gebildet werden, gleich zu oder mehr als 6,0 µl/cm2 · mg Katalysator; und
die Poren, die durch die Kohlenstofffaser gebildet werden, eine Porendurchmesserverteilung umfassend einen ersten Peak, der in den Porendurchmesser-Bereich von 0,01 bis 0,1 µm fällt, einen zweiten Peak, der in den Porendurchmesser-Bereich von 0,1 bis 1,0 µm fällt, haben, wobei die Höhe des ersten Peaks niedriger ist als die Höhe des zweiten Peaks.

## Revendications

1. Assemblage membrane-électrode comprenant une électrode anodique, une électrode cathodique et une membrane électrolyte polymère constituée d'un polymère à base de polyarylène sulfoné et maintenue entre les deux électrodes, dans laquelle :
ladite électrode cathodique comprend une couche de catalyseur d'électrode contenant une particule catalytique ayant le catalyseur chargé sur les particules de carbone, une fibre de carbone en tant qu'élément porogène et un polymère conducteur d'ions dont le rapport massique est compris entre 1,0 et 1,8 par rapport auxdites particules de carbone, et est en contact avec ladite membrane électrolyte polymère par le biais de ladite couche de catalyseur d'électrode ; et
ladite couche de catalyseur d'électrode a un volume total de pores s'inscrivant dans la gamme de diamètres de pores allant de 0,01 à 30 µm, de pores formés par ladite fibre de carbone et étant égal ou supérieur à 6,0 µl/cm² · mg de catalyseur.

2. Assemblage membrane-électrode selon la revendication 1, dans laquelle les pores formés par ladite fibre de carbone ont une répartition des diamètres de pores comprenant un premier pic s'inscrivant dans la gamme de diamètres de pores allant de 0,01 à 0,1 µm et un deuxième pic s'inscrivant dans la gamme de diamètres de pores allant de 0,1 à 1,0 µm.

3. Pile à combustible à électrolyte polymère dans laquelle, dans l'assemblage membrane-électrode selon la revendication 1 comprenant une électrode anodique, une électrode cathodique et une membrane électrolyte polymère constitué d'un polymère à base de polyarylène sulfoné et maintenue entre les deux électrodes, un gaz combustible est fourni à ladite électrode anodique, un gaz oxydant comprenant moins de 50 % d'humidité relative est fourni à ladite électrode cathodique et une tension électrique est ainsi générée dans des conditions de faible humidité, dans laquelle :
ladite électrode cathodique comprend une couche de catalyseur d'électrode contenant une particule catalytique ayant le catalyseur chargé sur les particules de carbone, une fibre de carbone et un polymère conducteur d'ions dont le rapport massique est compris entre 1,0 et 1,8 par rapport auxdites particules de carbone, et est en contact avec ladite membrane électrolyte polymère par le biais de ladite couche de catalyseur d'électrode ;
ladite couche de catalyseur d'électrode a un volume total de pores s'inscrivant dans la gamme de diamètres de pores allant de 0,01 à 30 µm, de pores formés par ladite fibre de carbone, égal ou supérieur à 6,0 µl/cm² · mg de catalyseur ; et
les pores formés par ladite fibre de carbone ont une répartition de diamètres de pores comprenant un premier pic s'inscrivant dans la gamme de diamètres de pores allant de 0,01 à 0,1 µm et un deuxième pic s'inscrivant dans la gamme de diamètres de pores allant de 0,1 à 1,0 µm, la hauteur dudit premier pic étant supérieure à la hauteur dudit deuxième pic.

4. Pile à combustible à électrolyte polymère selon la revendication 3, dans laquelle le polymère conducteur d'ions contenu dans la couche de catalyseur d'électrode de ladite électrode cathodique, a un rapport massique s'inscrivant dans la gamme allant de 1,2 à 1,8, par rapport auxdites particules de carbone.

5. Pile à combustible à électrolyte polymère selon la revendication 3, dans laquelle la couche de catalyseur d'électrode de ladite électrode cathodique est liée par transfert thermique à ladite membrane électrolyte polymère, et la répartition des diamètres de pores des pores formés par ladite fibre de carbone dans ladite couche de catalyseur d'électrode, avant transfert thermique, comprend un troisième pic dans la gamme de diamètres de pores égal ou supérieur à 5 µm, et
dans laquelle la hauteur dudit troisième pic est comprise dans la gamme allant de 0,9 à 1,8 µl/cm² · mg de catalyseur en termes de volume de pores.

6. Appareil électrique dans lequel une pile à combustible à électrolyte polymère selon la revendication 3 est utilisée, dans laquelle :
dans l'assemblage membrane-électrode comprenant une électrode anodique, une électrode cathodique et une membrane électrolyte polymère constituée d'un polymère à base de polyarylène sulfoné et maintenue entre les deux électrodes, un gaz combustible est fourni à ladite électrode anodique, un gaz oxydant comprenant moins de 50 % d'humidité relative est fourni à ladite électrode cathodique et une tension électrique est ainsi générée dans des conditions de faible humidité,
ladite électrode cathodique comprend une couche de catalyseur d'électrode contenant une particule catalytique ayant le catalyseur chargé sur les particules de carbone, une fibre de carbone et un polymère conducteur d'ions dont le rapport massique est compris entre 1,0 et 1,8 par rapport auxdites particules de carbone, et est en contact avec ladite membrane électrolyte polymère par le biais de ladite couche de catalyseur d'électrode ;
ladite couche de catalyseur d'électrode a un volume total de pores s'inscrivant dans la gamme de diamètres de pores allant de 0,01 à 30 µm, de pores formés par ladite fibre de carbone, égal ou supérieur à 6,0 µl/cm² · mg de catalyseur ; et
les pores formés par ladite fibre de carbone ont une répartition de diamètres de pores comprenant un premier pic s'inscrivant dans la gamme de diamètres de pores allant de 0,01 à 0,1 µm et un deuxième pic s'inscrivant dans la gamme de diamètres de pores allant de 0,1 à 1,0 µm, la hauteur dudit premier pic étant supérieure à la hauteur dudit deuxième pic.

7. Machine de transport dans laquelle une pile à combustible à électrolyte polymère selon la revendication 3 est utilisée, dans laquelle :
dans l'assemblage membrane-électrode comprenant une électrode anodique, une électrode cathodique et une membrane électrolyte polymère constituée d'un polymère à base de polyarylène sulfoné et maintenue entre les deux électrodes, un gaz combustible est fourni à ladite électrode anodique, un gaz oxydant comprenant moins de 50 % d'humidité relative est fourni à ladite électrode cathodique et une tension électrique est ainsi générée sous une condition de faible humidité,
ladite électrode cathodique comprend une couche de catalyseur d'électrode contenant une particule catalytique ayant le catalyseur chargé sur les particules de carbone, une fibre de carbone et un polymère conducteur d'ions dont le rapport massique est compris entre 1,0 et 1,8 par rapport auxdites particules de carbone, et est en contact avec ladite membrane électrolyte polymère par le biais de ladite couche de catalyseur d'électrode ;
ladite couche de catalyseur d'électrode a un volume total de pores s'inscrivant dans la gamme de diamètres de pores allant de 0,01 à 30 µm, de pores formés par ladite fibre de carbone, égal ou supérieur à 6,0 µl/cm²· mg de catalyseur ; et
les pores formés par ladite fibre de carbone ont une répartition de diamètres de pores comprenant un premier pic s'inscrivant dans la gamme de diamètres de pores allant de 0,01 à 0,1 µm et un deuxième pic s'inscrivant dans la gamme de diamètres de pores allant de 0,1 à 1,0 µm, la hauteur dudit premier pic étant supérieure à la hauteur dudit deuxième pic.

8. Pile à combustible à électrolyte polymère dans laquelle dans l'assemblage membrane-électrode selon la revendication 1 comprenant une électrode anodique, une électrode cathodique et une membrane électrolyte polymère constitué d'un polymère à base de polyarylène sulfoné et maintenue entre les deux électrodes, un gaz combustible est fourni à ladite électrode anodique, un gaz oxydant comprenant 50 % ou plus d'humidité relative est fourni à ladite électrode cathodique et une tension électrique est ainsi générée dans des conditions de forte humidité, dans laquelle :
ladite électrode cathodique comprend une couche de catalyseur d'électrode contenant une particule catalytique ayant le catalyseur chargé sur les particules de carbone, une fibre de carbone et un polymère conducteur d'ions dont le rapport massique est compris entre 1,0 et 1,8 par rapport auxdites particules de carbone, et est en contact avec ladite membrane électrolyte polymère par le biais de ladite couche de catalyseur d'électrode ;
ladite couche de catalyseur d'électrode a un volume total de pores s'inscrivant dans la gamme de diamètres de pores allant de 0,01 à 30 µm, de pores formés par ladite fibre de carbone, égal ou supérieur à 6,0 µl/cm²· mg de catalyseur ; et
les pores formés par ladite fibre de carbone ont une répartition de diamètres de pores comprenant un premier pic s'inscrivant dans la gamme de diamètres de pores allant de 0,01 à 0,1 µm et un deuxième pic s'inscrivant dans la gamme de diamètres de pores allant de 0,1 à 1,0 µm, la hauteur dudit premier pic étant inférieure à la hauteur dudit deuxième pic.

9. Pile à combustible à électrolyte polymère selon la revendication 8, dans laquelle le polymère conducteur d'ions contenu dans la couche de catalyseur d'électrode de ladite électrode cathodique, a un rapport massique s'inscrivant dans la gamme allant de 1,0 à 1,6, par rapport auxdites particules de carbone.

10. Pile à combustible à électrolyte polymère selon la revendication 8, dans laquelle la couche de catalyseur d'électrode de ladite électrode cathodique est liée par transfert thermique à ladite membrane électrolyte polymère, et la répartition de diamètres de pores des pores formés par ladite fibre de carbone dans ladite couche de catalyseur d'électrode, avant transfert thermique, comprend un troisième pic dans la gamme de diamètres de pores égal ou supérieur à 5 µm, et
dans laquelle la hauteur dudit troisième pic est de 0,18 µl/cm²·mg ou plus de catalyseur en termes de volume de pores.

11. Appareil électrique dans lequel une pile à combustible à électrolyte polymère selon la revendication 8 est utilisée, dans laquelle :
dans l'assemblage membrane-électrode comprenant une électrode anodique, une électrode cathodique et une membrane électrolyte polymère constituée d'un polymère à base de polyarylène sulfoné et maintenue entre les deux électrodes, un gaz combustible est fourni à ladite électrode anodique, un gaz oxydant comprenant 50 % ou plus d'humidité relative est fourni à ladite électrode cathodique et une tension électrique est ainsi générée dans des conditions de forte humidité, dans laquelle :
ladite électrode cathodique comprend une couche de catalyseur d'électrode contenant une particule catalytique ayant le catalyseur chargé sur les particules de carbone, une fibre de carbone et un polymère conducteur d'ions dont le rapport massique est compris entre 1,0 et 1,8 par rapport auxdites particules de carbone, et est en contact avec ladite membrane électrolyte polymère par le biais de ladite couche de catalyseur d'électrode ;
ladite couche de catalyseur d'électrode a un volume total de pores s'inscrivant dans la gamme de diamètres de pores allant de 0,01 à 30 µm, de pores formés par ladite fibre de carbone, égal ou supérieur à 6,0 µl/cm² · mg de catalyseur ; et
les pores formés par ladite fibre de carbone ont une répartition de diamètres de pores comprenant un premier pic s'inscrivant dans la gamme de diamètres de pores allant de 0,01 à 0,1 µm et un deuxième pic s'inscrivant dans la gamme de diamètres de pores allant de 0,1 à 1,0 µm, la hauteur dudit premier pic étant inférieure à la hauteur dudit deuxième pic.

12. Machine de transport dans laquelle une pile à combustible à électrolyte polymère selon la revendication 8 est utilisée, dans laquelle :
dans l'assemblage membrane-électrode comprenant une électrode anodique, une électrode cathodique et une membrane électrolyte polymère constituée d'un polymère à base de polyarylène sulfoné et maintenue entre les deux électrodes, un gaz combustible est fourni à ladite électrode anodique, un gaz oxydant comprenant 50 % ou plus d'humidité relative est fourni à ladite électrode cathodique et une tension électrique est ainsi générée dans des conditions de forte humidité,
ladite électrode cathodique comprend une couche de catalyseur d'électrode contenant une particule catalytique ayant le catalyseur chargé sur les particules de carbone, une fibre de carbone et un polymère conducteur d'ions dont le rapport massique est compris entre 1,0 et 1,8 par rapport auxdites particules de carbone, et est en contact avec ladite membrane électrolyte polymère par le biais de ladite couche de catalyseur d'électrode ;
ladite couche de catalyseur d'électrode a un volume total de pores s'inscrivant dans la gamme de diamètres de pores allant de 0,01 à 30 µm, de pores formés par ladite fibre de carbone, égal ou supérieur à 6,0 µl/cm² · mg de catalyseur ; et
les pores formés par ladite fibre de carbone ont une répartition de diamètres de pores comprenant un premier pic s'inscrivant dans la gamme de diamètres de pores allant de 0,01 à 0,1 µm et un deuxième pic s'inscrivant dans la gamme de diamètres de pores allant de 0,1 à 1,0 µm, la hauteur dudit premier pic étant inférieure à la hauteur dudit deuxième pic.
